(19) Europäisches Patentamt
European Patent Office
Office européen des brevets

(11) EP 4 112 190 A1

(12) **EUROPEAN PATENT APPLICATION**
published in accordance with Art. 153(4) EPC

(43) Date of publication:
**04.01.2023 Bulletin 2023/01**

(21) Application number: **21761723.2**

(22) Date of filing: **26.02.2021**

(51) International Patent Classification (IPC):
***B05D 3/02*** (2006.01) ***B05D 7/24*** (2006.01)
***C09D 5/00*** (2006.01) ***C09D 5/02*** (2006.01)
***C09D 161/28*** (2006.01) ***C09D 175/04*** (2006.01)
***C09D 175/06*** (2006.01) ***C09D 179/02*** (2006.01)

(52) Cooperative Patent Classification (CPC):
**B05D 3/02; B05D 7/24; C09D 5/00; C09D 5/02; C09D 161/28; C09D 175/04; C09D 175/06; C09D 179/02**

(86) International application number:
**PCT/JP2021/007481**

(87) International publication number:
**WO 2021/172550 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2020 JP 2020033679**

(71) Applicant: **Nippon Paint Automotive Coatings Co., Ltd.**
**Hirakata-shi, Osaka 573-1153 (JP)**

(72) Inventors:
- **SEKINE, Kazuki**
**Hirakata-shi, Osaka 573-1153 (JP)**
- **OHTONARI, Masatoshi**
**Hirakata-shi, Osaka 573-1153 (JP)**

(74) Representative: **Mewburn Ellis LLP**
**Aurora Building**
**Counterslip**
**Bristol BS1 6BX (GB)**

(54) **AQUEOUS COATING COMPOSITION AND MULTILAYERED COATING FILM FORMATION METHOD**

(57) An object of the present invention is to provide an aqueous coating composition that exhibits a small change in viscosity and can form a coating film having a superior coating film appearance even when the amount of a solvent contained in the aqueous coating composition decreases due to the change of the coating environment. The present invention provides an aqueous coating composition containing a polyurethane resin dispersion (A) and a melamine resin (B), wherein the melamine resin (B) contains a hydrophobic melamine resin, and the polyurethane resin constituting the polyurethane resin dispersion (A) has a viscosity in a range of 101 to 150,000 Pa•s measured at a temperature of 25°C and a shear rate of 0.1 $sec^{-1}$.



Processed by Luminess, 75001 PARIS (FR)

## Description

### TECHNICAL FIELD

The present invention relates to an aqueous coating composition and a method for forming a multilayer coating film.

### BACKGROUND ART

Aqueous coating compositions are coating compositions containing an aqueous solvent. Generally, such an aqueous coating composition tends to be affected in the rate of solvent volatilization by the change of coating environment such as temperature and humidity in coating. The change of the rate of solvent volatilization may cause change of the appearance and/or the physical properties of a coating film formed by application.

One example of coping with such change of the coating environment may be a method of adjusting the rate of solvent volatilization by adjusting the amount of the solvent contained in the aqueous coating composition. For example, JP-A-2008-302274 (Patent Literature 1) discloses a method of determining a coating NV (nonvolatile content) according to the coating environment. As disclosed in Patent Literature 1, in the application of an aqueous coating composition, parameters such as the viscosity of the coating composition are often adjusted by adjusting the amount of the solvent of the aqueous coating composition, etc. according to the coating environment such as temperature and humidity. However, such adjustment of parameters is complicated.

In the application of an aqueous coating composition, another means for reducing the influence of the coating environment may be the use of a viscosity control agent. For example, JP-A-2006-70095 (Patent Literature 2) discloses a multicomponents aqueous coating composition comprising (I) a diluent and (II) a base coating material, wherein the diluent (I) comprises a viscosity control agent (A) and water, the base coating material (II) comprises a resin component (B), a viscosity control agent (C) and water, and the viscosity control agent (A) and the viscosity control agent (C) are selected from a combination of an inorganic viscosity control agent and a polyacrylic viscosity control agent, a combination of a urethane-associated viscosity control agent and a polyacrylic viscosity control agent, and a combination of a urethane-associated viscosity control agent and an inorganic viscosity control agent (claim 1). On the other hand, in the method of adjusting the viscosity using a viscosity control agent, it is possible to increase the viscosity of the coating composition, but it is difficult to design a coating composition having a low viscosity.

Incidentally, in the field of the application of a coating composition, there is an application method called "wet-on-wet" that can shorten the application process by applying a first coating composition, then applying a second coating composition without curing the resulting coating film, and then curing the two coating films simultaneously. However, the case where the first coating composition and the second coating composition are wet-on-wet applied is problematic in that the coating compositions are mixed at between the layers of the two uncured coating films (mix of layers) and, as a result, an undesirable phenomenon, namely, deterioration of coating film appearance may occur.

### CITATIONS LIST

### PATENT LITERATURE

Patent Literature 1: JP-A-2008-302274
Patent Literature 2: JP-A-2006-70095

### SUMMARY OF INVENTION

### TECHNICAL PROBLEMS

In the application of an aqueous coating composition, a means for reducing the influence of coating environment without impairing the appearance of a resulting coating film is required. The present invention solves the above problems, and an object of the present invention is to provide an aqueous coating composition that exhibits a small change in viscosity and can form a coating film having a superior coating film appearance even when the amount of a solvent contained in the aqueous coating composition decreases due to the change of the coating environment.

SOLUTION TO PROBLEMS

In order to solve the above-described problems, the present invention provides the following embodiments.

[1] An aqueous coating composition comprising a polyurethane resin dispersion (A) and a melamine resin (B), wherein

the melamine resin (B) comprises a hydrophobic melamine resin, and
the polyurethane resin constituting the polyurethane resin dispersion (A) has a viscosity in a range of 101 to 150,000 Pa•s measured at a temperature of 25°C and a shear rate of 0.1 $sec^{-1}$.

[2] The aqueous coating composition of [1], wherein the polyurethane resin constituting the polyurethane resin dispersion (A) has a hydroxyl group, and the polyurethane resin has a hydroxyl value in a range of 15 to 100 mg KOH/g.
[3] The aqueous coating composition of [1] or [2], wherein the polyurethane resin constituting the polyurethane resin dispersion (A) has an acid group, and the polyurethane resin has an acid value in a range of 5 to 18 mg KOH/g.
[4] The aqueous coating composition of any one of [1] to [3], wherein the aqueous coating composition further comprises one or more dispersions selected from the group consisting of an acrylic resin dispersion and a polyester resin dispersion.
[5] The aqueous coating composition of any one of [1] to [4], wherein in the polyurethane resin constituting the polyurethane resin dispersion (A), a mass ratio of an insoluble component generated when the polyurethane resin and acetone of 25°C having a mass 10 times the mass of the polyurethane resin are stirred at 80°C for 180 minutes in a sealed state is 5% by mass or less based on the mass of the polyurethane resin.
[6] The aqueous coating composition of any one of [1] to [5], wherein the polyurethane resin constituting the polyurethane resin dispersion (A) has a urethane group content of 1.0 to 3.5 mmol/g based on the mass of the polyurethane resin.
[7] The aqueous coating composition of any one of [1] to [6], wherein the polyurethane resin constituting the polyurethane resin dispersion (A) has a urea group content of 0.8 mmol/g or less based on the mass of the polyurethane resin.
[8] The aqueous coating composition of any one of [1] to [7], wherein the polyurethane resin constituting the polyurethane resin dispersion (A) is a polyester resin comprising an active hydrogen component and an organic polyisocyanate component as constituent monomers, and the active hydrogen component comprises a polyether polyol having a number average molecular weight of 500 or more.
[9] The aqueous coating composition of [8], wherein the organic polyisocyanate component comprises one or more polyisocyanates selected from the group consisting of chain aliphatic polyisocyanates having 4 to 22 carbon atoms and alicyclic polyisocyanates having 8 to 18 carbon atoms.
[10] The aqueous coating composition of any one of [1] to [9], wherein as to the viscosity of a dry coating film of the coating composition, a coating film viscosity $\eta1$ of a dry coating film whose solid content is 60% by mass and a coating film viscosity $\eta2$ of a dry coating film whose solid content is 80% by mass satisfy the following condition:

$$1 \leq \eta2/\eta1 \leq 10$$

where the coating film viscosities $\eta1$ and $\eta2$ are viscosities measured at a temperature of 25°C and a shear rate of 0.1 $sec^{-1}$.
[11] A method for forming a multilayer coating film, the method comprising step (1) of applying a first aqueous base coating composition to a surface of an article to be coated to obtain an uncured first aqueous base coating film; step (2) of applying a second aqueous base coating composition to the uncured first aqueous base coating film to form an uncured second aqueous base coating film; step (3) of applying a clear coating composition to the uncured second aqueous base coating film to form an uncured clear coating film; and step (4) of heating and curing the uncured first aqueous base coating film, the uncured second aqueous base coating film, and the uncured clear coating film obtained in the steps (1) to (3) at one time to form a multilayer coating film,

wherein the first aqueous base coating composition is the aqueous coating composition of any one of [1] to [10].

ADVANTAGEOUS EFFECTS OF INVENTION

The aqueous coating composition is characterized in that by virtue of containing a specific polyurethane resin dispersion (A), the viscosity change is small even when the amount of the solvent contained in the coating composition is reduced. Therefore, there is an advantage that coating can be performed without significantly changing coating

workability even in a state where the amount of solvent has been reduced. The aqueous coating composition has an advantage that it can exhibit good coating workability even under various coating environments differing in temperature and/or humidity.

DESCRIPTION OF EMBODIMENTS

The aqueous coating composition comprises a polyurethane resin dispersion (A) and a melamine resin (B). In the following, respective components are described in detail.

Polyurethane resin dispersion (A)

The aqueous coating composition comprises a polyurethane resin dispersion (A). The polyurethane resin constituting the polyurethane resin dispersion (A) is required to have a viscosity in a range of 101 to 150,000 Pa•s measured at a temperature of 25°C and a shear rate of 0.1 $sec^{-1}$. The polyurethane resin preferably has an acid group and the acid value of the polyurethane resin is preferably in a range of 5 to 18 mg KOH/g, and the polyurethane resin preferably has a hydroxyl group. The inclusion of the specific polyurethane resin dispersion in the aqueous coating composition offers an advantage that a change in viscosity is small and a coating film having a superior coating film appearance can be formed even when the amount of a solvent contained in the aqueous coating composition decreases due to the change of the coating environment.

The polyurethane resin constituting the polyurethane resin dispersion (A) is a resin comprising an active hydrogen component (a) and an organic polyisocyanate component (b) as essential constituent monomers. In the polyurethane resin dispersion (A), at least part of the acid groups of the polyurethane resin constituting the polyurethane resin dispersion (A) may be neutralized, as necessary.

The active hydrogen in the active hydrogen component (a) means a hydrogen atom that is bonded to oxygen, nitrogen, sulfur, or the like and is highly reactive with an isocyanate group, and examples of a group having active hydrogen (an active hydrogen-containing group) include a hydroxyl group, a primary amino group, a secondary amino group, and a thiol group. In the present invention, the active hydrogen-containing group does not include a carboxyl group and a sulfo group.

Examples of the active hydrogen component (a) include a high-molecular polyol (a1), a low-molecular polyol (a2), a compound (a3) having an active hydrogen atom and a hydrophilic group excluding an acid group, and a chain extender (a4).

Examples of the high-molecular polyol (a1) include high-molecular polyols having a number average molecular weight of 300 or more. The Mn of (a1) is preferably 500 or more, and more preferably 500 to 2000.

The number average molecular weight (hereinafter, it may be abbreviated as Mn) and the weight average molecular weight (hereinafter, it may be abbreviated as Mw) of the high-molecular polyol in the present invention are measured by gel permeation chromatography (GPC) using polystyrene as a standard.

Mw and Mn are measured by the following measurement method.

<Method for measuring Mw and Mn>

A high-molecular polyol or a polyurethane resin or an aqueous polyurethane dispersion is added in DMF such that the solid content is 0.125% by mass, the mixture is stirred and dissolved at normal temperature for 1 hour, filtered through a filter having a pore size of 0.3 μm, and Mw and Mn of the components contained in the filtrate obtained are measured by GPC using DMF as a solvent and polystyrene as a molecular weight standard.

<GPC measurement conditions>

The conditions for GPC measurement of a high-molecular polyol, a polyurethane resin, and an aqueous polyurethane dispersion in the present invention are as follows.

Instrument: "HLC-8220 GPC" [manufactured by Tosoh Corporation]
Column: "Guardcolumn α" + "TSKgel α-M" [both manufactured by Tosoh Corporation]
Sample solution: 0.125% by mass dimethylformamide solution
Eluent: dimethylformamide
Solution injection amount: 100 μl
Flow rate: 1 ml/min
Measurement temperature: 40°C
Detector: refractive index detector

Reference: standard polystyrene (TSK standard POLYSTYRENE)

[manufactured by Tosoh Corporation]

Examples of the high-molecular polyol (a1) include polyether polyols, polyester polyols, and polycarbonate polyols.

Examples of the polyether polyol include aliphatic polyether polyols and aromatic ring-containing polyether polyols.

It is to be noted that the polyether polyol does not include polyester polyols and polycarbonate polyols described later.

Examples of the aliphatic polyether polyol include adducts of alkylene oxides having 2 to 4 carbon atoms to aliphatic polyhydric alcohols having 2 to 20 carbon atoms (ethylene glycol, propylene glycol, butanediol, dodecanediol, glycerin, and the like).

Specific examples thereof include polyoxyethylene polyols [polyethylene glycol (hereinafter, abbreviated as PEG), and the like], polyoxypropylene polyols [polypropylene glycol, and the like], polyoxyethylene/propylene polyol, and polytetramethylene ether glycol.

Examples of commercially available products of the aliphatic polyether polyol include PTMG 1000 [polytetramethylene ether glycol with Mn = 1,000, manufactured by Mitsubishi Chemical Corporation], PTMG 1300 [polytetramethylene ether glycol with Mn = 1,300, manufactured by Mitsubishi Chemical Corporation], PTMG 1500 [polytetramethylene ether glycol with Mn = 1,500, manufactured by Mitsubishi Chemical Corporation], PTMG 1800 [polytetramethylene ether glycol with Mn = 1,800, manufactured by Mitsubishi Chemical Corporation], PTMG 2000 [polytetramethylene ether glycol with Mn = 2,000, manufactured by Mitsubishi Chemical Corporation], PTMG 3000 [polytetramethylene ether glycol with Mn = 3,000, manufactured by Mitsubishi Chemical Corporation], PTMG 4000 [polytetramethylene ether glycol with Mn = 4,000, manufactured by Mitsubishi Chemical Corporation], PTGL 3000 [modified PTMG with Mn = 3,000, manufactured by Hodogaya Chemical Co., Ltd.], and SANNIX diol GP-3000 [polypropylene ether triol with Mn = 3,000, manufactured by Sanyo Chemical Industries, Ltd.].

As a specific method for producing the aliphatic polyether polyol, when taking polytetramethylene ether glycol (PTMG), which is a polyether polyol, as an example, there is a method of producing it by ring-opening polymerization of tetrahydrofuran (THF), which is a common production method.

Examples of the aromatic polyether polyol include adducts of alkylene oxides having 2 to 4 carbon atoms to compounds having an aromatic ring and two or more hydroxyl groups and having 6 to 20 carbon atoms (bisphenol, resorcin, and the like).

Specific examples thereof include adducts of EO or PO to a polyol having a bisphenol skeleton and resorcin, such as adducts of ethylene oxide (hereinafter, abbreviated as EO) to bisphenol A [an adduct of 2 mol EO to bisphenol A, an adduct of 4 mol EO to bisphenol A, an adduct of 6 mol EO to bisphenol A, an adduct of 8 mol EO to bisphenol A, an adduct of 10 mol EO to bisphenol A, an adduct of 20 mol EO to bisphenol A, and the like], and adducts of propylene oxide (hereinafter, abbreviated as PO) to bisphenol A [an adduct of 2 mol PO to bisphenol A, an adduct of 3 mol PO to bisphenol A, an adduct of 5 mol PO to bisphenol A, and the like].

Examples of the polyester polyol include condensed polyester polyols, polylactone polyols, and castor oil-based polyols. It is to be noted that the polyester polyol does not include polycarbonate polyols described later.

The condensed polyester polyol is a polyester polyol composed of a low molecular weight (Mn: less than 300) polyhydric alcohol and a polyvalent carboxylic acid having 2 to 10 carbon atoms or an ester-forming derivative thereof.

As the low molecular weight polyhydric alcohol, a low molar alkylene oxide (EO, PO, 1,2-, 1,3-, 2,3- or 1,4-butylene oxide, and the like; hereinafter abbreviated as AO) adduct to a divalent to octavalent or higher aliphatic polyhydric alcohol having an Mn of less than 300 and a divalent to octavalent or higher phenol having an Mn of less than 300 can be used.

Preferred among the low molecular weight polyhydric alcohols that can be used for the condensed polyester polyols are ethylene glycol, propylene glycol, 1,4-butanediol, neopentyl glycol, 1,6-hexane glycol, low molar adducts of EO or PO to bisphenol A, and combinations thereof.

Examples of the polyvalent carboxylic acid having 2 to 10 carbon atoms or an ester-forming derivative thereof that can be used for the condensed polyester polyol include aliphatic dicarboxylic acids (e.g., succinic acid, adipic acid, azelaic acid, sebacic acid, fumaric acid, and maleic acid), alicyclic dicarboxylic acids (e.g., dimer acid), aromatic dicarboxylic acids (e.g., terephthalic acid, isophthalic acid, and phthalic acid), trivalent or higher polycarboxylic acids (e.g., trimellitic acid and pyromellitic acid), anhydrides thereof (e.g., succinic anhydride, maleic anhydride, phthalic anhydride, and trimellitic anhydride), acid halides thereof (e.g., adipic acid dichloride), low molecular weight alkyl esters thereof (e.g., dimethyl succinate and dimethyl phthalate), and combinations thereof.

Specific examples of the condensed polyester polyol include polyethylene adipate diol, polybutylene adipate diol, polyhexamethylene adipate diol, polyhexamethylene isophthalate diol, polyneopentyl adipate diol, polyethylene propylene adipate diol, polyethylene butylene adipate diol, polybutylene hexamethylene adipate diol, polydiethylene

adipate diol, poly(polytetramethylene ether) adipate diol, poly(3-methylpentylene adipate) diol, polyethylene azelate diol, polyethylene sebacate diol, polybutylene azelate diol, polybutylene sebacate diol, and polyneopentyl terephthalate diol.

Examples of commercially available products of the condensed polyester polyol include KURARAY POLYOL P-1010 [poly(3-methylpentylene adipate) diol with Mn = 1,000, manufactured by Kuraray Co., Ltd.], KURARAY POLYOL P-2010 [poly(3-methylpentylene adipate) diol with Mn = 2,000, manufactured by Kuraray Co., Ltd.], KURARAY POLYOL P-3010 [poly(3-methylpentylene adipate) diol with Mn = 3,000, manufactured by Kuraray Co., Ltd.], KURARAY POLYOL P-4010 [poly(3-methylpentylene adipate) diol with Mn = 4,000, manufactured by Kuraray Co., Ltd.], SANESTER 2610 [polyethylene adipate diol with Mn = 1,000, manufactured by Sanyo Chemical Industries, Ltd.], SANESTER 4620 [polytetramethylene adipate diol with Mn = 2,000], and SANESTER 2620 [polyethylene adipate diol with Mn = 2,000, manufactured by Sanyo Chemical Industries, Ltd.].

The polylactone polyol is a polyadduct of a lactone to the low molecular weight polyhydric alcohol, and examples of the lactone include lactones having 4 to 12 carbon atoms (e.g., γ-butyrolactone, γ-valerolactone, and ε-caprolactone). Specific examples of the polylactone polyol include polycaprolactone diol, polyvalerolactone diol, and polycaprolactone triol.

Castor oil-based polyols include castor oil and modified castor oil modified with polyol or AO. The modified castor oil can be produced by transesterification of castor oil with a polyol and/or addition of AO to castor oil. Examples of the castor oil-based polyol include castor oil, trimethylolpropane-modified castor oil, pentaerythritolmodified castor oil, and an EO (4 to 30 mol) adduct to castor oil.

Examples of the polycarbonate polyol include a polycarbonate polyol produced by condensing the low molecular weight polyhydric alcohol with a low-molecular carbonate compound (e.g., a dialkyl carbonate in which each alkyl group having 1 to 6 carbon atoms, an alkylene carbonate having an alkylene group having 2 to 6 carbon atoms, and a diaryl carbonate having aryl groups each having 6 to 9 carbon atoms) while performing a dealcoholization reaction. Two or more low molecular weight polyhydric alcohols may be used in combination and two or more alkylene carbonates may be used in combination.

Specific examples of the polycarbonate polyol include polyhexamethylene carbonate diol, polypentamethylene carbonate diol, polytetramethylene carbonate diol, and poly(tetramethylene/hexamethylene) carbonate diol (e.g., a diol obtained by condensing 1,4-butanediol and 1,6-hexanediol with a dialkyl carbonate while performing a dealcoholization reaction).

Examples of commercially available products of the polycarbonate polyol include NIPPOLAN 980R [polyhexamethylene carbonate diol with Mn = 2,000, manufactured by Nippon Polyurethane Industry Co., Ltd.], KURARAY POLYOL C-1090 [poly(3-methyl-5-pentanediol/hexamethylene) carbonate diol with Mn = 1,000, manufactured by Kuraray Co., Ltd.], KURARAY POLYOL C-2090 [poly(3-methyl-5-pentanediol/hexamethylene) carbonate diol with Mn = 2,000, manufactured by Kuraray Co., Ltd.], KURARAY POLYOL C-3090 [poly(3-methyl-5-pentanediol/hexamethylene) carbonate diol with Mn = 3,000, manufactured by Kuraray Co., Ltd.], KURARAY POLYOL C -4090 [poly(3-methyl-5-pentanediol/hexamethylene) carbonate diol with Mn = 4,000, manufactured by Kuraray Co., Ltd.], and T4672 [poly(tetramethylene/hexamethylene) carbonate diol with Mn = 2,000, manufactured by Asahi Kasei Chemicals Corporation].

Examples of the low-molecular polyol (a2) include low-molecular polyols having a number average molecular weight (hereinafter, abbreviated as Mn) of less than 300.

The Mn of the low-molecular polyol is a value calculated from a chemical formula.

Examples of the low-molecular polyol (a2) having an Mn of less than 300 include aliphatic dihydric alcohols, aliphatic trihydric alcohols, and tetrahydric or higher aliphatic alcohols. Among (a2), from the viewpoint of water resistance and thermal yellowing resistance, aliphatic dihydric alcohols and aliphatic trihydric alcohols are preferable; ethylene glycol, propylene glycol, 1,4-butanediol, neopentyl glycol, and 1,6-hexanediol are particularly preferable as the aliphatic dihydric alcohol, and trimethylolpropane is particularly preferable as the aliphatic trihydric alcohol.

In the present invention, the hydrophilic group of the compound having a hydrophilic group and active hydrogen (a3) refers to a carboxyl group, a carboxylate group, a sulfo group, and a sufonato group.

As described above, active hydrogen refers to active hydrogen other than those of a carboxyl group and a sulfo group.

Examples of the compound having a hydrophilic group and active hydrogen (a3) include compounds having a carboxyl group and having 2 to 10 carbon atoms [dialkylolalkanoic acids (e.g., 2,2-dimethylolpropionic acid, 2,2-dimethylolbutanoic acid, 2,2-dimethylolheptanoic acid, and 2,2-dimethyloloctanoic acid), tartaric acid, amino acids (e.g., glycine, alanine, and valine), etc.], compounds having a sulfo group and having 2 to 16 carbon atoms [e.g. 3-(2,3-dihydroxypropoxy)-1-propanesulfonic acid and di(ethylene glycol) sulfoisophthalate], and compounds having a sulfamic acid group and having 2 to 10 carbon atoms [e.g., N,N-bis(2-hydroxylethyl)sulfamic acid].

Among them, compounds having a carboxyl group and a carboxylate group are preferable, and 2,2-dimethylolpropionic acid and 2,2-dimethylolbutanoic acid are more preferable.

Examples of the chain extender (a4) include compounds other than the compounds (a1) to (a3), and specific examples thereof include water, diamines having 2 to 10 carbon atoms (e.g., ethylenediamine, propylenediamine, hexamethylenediamine, isophoronediamine, toluenediamine, and piperazine), polyalkylene polyamines having 2 to 10 carbon atoms (e.g., diethylenetriamine and triethylenetetramine), hydrazine or derivative thereof (e.g., dibasic acid dihydrazide such as adipic acid dihydrazide), polyepoxy compounds having 2 to 30 carbon atoms (e.g., 1,6-hexanediol diglycidyl ether and trimethylolpropane polyglycidyl ether), and amino alcohols having 2 to 10 carbon atoms (e.g., ethanolamine, diethanolamine, 2-amino-2-methylpropanol, and triethanolamine).

The polyurethane resin may further comprise a reaction terminator (a5), as necessary, as a constituent monomer. Examples of the reaction terminator (a5) include monoalcohols having 1 to 8 carbon atoms (e.g., methanol, ethanol, isopropanol, cellosolves, and carbitols) and monoamines having 1 to 10 carbon atoms (mono- or dialkylamines such as monomethylamine, monoethylamine, monobutylamine, dibutylamine, and monooctylamine; mono- or dialkanolamines such as monoethanolamine, diethanolamine, and diisopropanolamine).

From the viewpoint of adjusting the viscosity of the polyurethane resin constituting the polyurethane resin dispersion (A) to fall in a range to be described in detail later, the active hydrogen component (a) preferably comprises, as an essential constituent monomer, polytetramethylene ether glycol, which is the high-molecular polyol (a1). The Mn of the polytetramethylene ether glycol is preferably 500 to 2,000 from the viewpoint of adjusting the viscosity of the polyurethane resin to fall in a range described in detail later.

The compound having a hydrophilic group and active hydrogen (a3), which is one embodiment of the active hydrogen component (a), preferably comprises a compound having an acid group (e.g., a carboxyl group) as an essential constituent monomer. As a result, the polyurethane resin constituting the polyurethane resin dispersion (A) has an acid group. As to the amount of the compound (a3), the compound is used in an amount that allows the acid value of the polyurethane resin to fall in the range to be described in detail later.

The amounts of the chain extender (a4) and the reaction terminator (a5) used affect the urea group content described later, and also affect the viscosity of the polyurethane resin constituting the polyurethane resin dispersion (A), and thus it is necessary to use the chain extender (a4) and the reaction terminator (a5) in a range where the effect of the present invention is not impaired. Specifically, it is necessary to use these agents in a range in which the viscosity of the polyurethane resin is a value to be described in detail later. Therefore, it is preferable that the chain extender (a4) and the reaction terminator (a5) are used in amounts at which the urea group content in the polyurethane resin is a value described later.

As the organic polyisocyanate component (b), which is an essential constituent component of the polyurethane resin, those conventionally used for polyurethane resin production can be used. Examples of the organic polyisocyanate component (b) include aliphatic polyisocyanates having 2 to 3 or more isocyanate groups and having 4 to 22 carbon atoms (b1), alicyclic polyisocyanates having 8 to 18 carbon atoms (b2), araliphatic polyisocyanates having 10 to 17 carbon atoms (b3), aromatic polyisocyanates having 8 to 22 carbon atoms (b4), and derivatives of (b1) to (b4) (e.g., isocyanurates).

Examples of the aliphatic polyisocyanate having 4 to 22 carbon atoms (b1) include ethylene diisocyanate, tetramethylene diisocyanate, hexamethylene diisocyanate (HDI), dodecamethylene diisocyanate, 2,2,4-trimethylhexamethylene diisocyanate, lysine diisocyanate, and 2-isocyanatoethyl-2,6-diisocyanatohexanoate.

Examples of the alicyclic polyisocyanate having 8 to 18 carbon atoms (b2) include isophorone diisocyanate (IPDI), 4,4-dicyclohexylmethane diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate, and 2,5-or 2,6-norbornane diisocyanate.

Examples of the araliphatic polyisocyanate having 10 to 17 carbon atoms (b3) include m- and/or p-xylylene diisocyanate (XDI) and $\alpha,\alpha,\alpha',\alpha'$-tetramethylxylylene diisocyanate (TMXDI).

Examples of the aromatic polyisocyanate having 8 to 22 carbon atoms (b4) include 1,3- or 1,4-phenylene diisocyanate, 2,4- or 2,6-tolylene diisocyanate (TDI), 4,4'-or 2,4'-diphenylmethane diisocyanate (MDI), 1,5-naphthylene diisocyanate, 4,4',4"-triphenylmethane triisocyanate, m- or p-isocyanatophenylsulfonyl isocyanate, and crude MDI.

Among the polyisocyanates (b), (b1) and (b2) are preferable, (b2) is more preferable, and IPDI and hydrogenated MDI are particularly preferable from the viewpoint of mechanical properties and weather resistance of a resulting film.

Since the type of the organic polyisocyanate component (b) affects the urethane group content described later and also affects the viscosity of the polyurethane resin described in detail later, it is necessary to use the organic polyisocyanate component (b) in a range that does not impair the effect of the present invention. Specifically, it is necessary to use the organic polyisocyanate component (b) in a range in which the viscosity of the polyurethane resin is a value described later. Therefore, as the type of the organic polyisocyanate component (b), it is preferable to use the organic polyisocyanate component (b) in an amount at which the urethane group content in the polyurethane resin is a value described later.

The polyurethane resin in the present invention may comprise additives such as an antioxidant, a coloring inhibitor, a weathering stabilizer, a plasticizer, and a mold release agent, as necessary. The amount of these additives used is preferably 10% by mass or less, more preferably 3% by mass or less, and particularly preferably 1% by mass or less based on the mass of the polyurethane resin.

Regarding the polyurethane resin, the viscosity of the polyurethane resin at 25°C measured at a shear rate of 0.1/s using a rheometer is 101 to 150,000 Pa•s. The viscosity is preferably in a range of 150 to 150,000 Pa•s, more preferably in a range of 200 to 120,000 Pa•s, and still more preferably in a range of 300 to 120,000 Pa•s.

Viscosity measurement using a rheometer can be performed under the following conditions using, for example, "MCR-302" manufactured by Anton Paar GmbH.

<Measurement conditions>

Measurement jig: parallel plate "PP-08" (diameter: 8 mm, distance between plates: 0.5 mm)
Measurement temperature: 25°C
Measurement mode: rotation
Shear rate: 0.1/sec

The viscosity of the polyurethane resin can be adjusted to fall in the above range by, as described above, using polytetramethylene ether glycol, which is a high-molecular polyol (a1), as the active hydrogen component (a), adjusting the urethane group content and the urea group content to preferable values described later, and, regarding the active hydrogen component (a) and the organic polyisocyanate component (b) constituting the polyurethane resin, adjusting the equivalent ratio of isocyanate groups/active hydrogen to a preferable value (0.6 to 0.95) described later, adjusting the molecular weights to preferable values described later, and adjusting the acid values to values described later.

For example, when the viscosity of the polyurethane resin is low, the molecular weight of the polyurethane resin can be increased and the viscosity of the polyurethane resin can be increased by increasing the equivalent ratio of isocyanate groups/active hydrogen in a preferable range described later. The viscosity of the polyurethane resin can be increased by increasing the urethane group content, the urea group content, and the acid value in the ranges of the values described later.

In addition, for example, when the viscosity of the polyurethane resin is high, the molecular weight of the polyurethane resin can be reduced and the viscosity of the polyurethane resin can be reduced by reducing the equivalent ratio of isocyanate groups/active hydrogen in a preferable range described later. In addition, the viscosity of the polyurethane resin can be reduced by lowering the urethane group content, the urea group content, and the acid value in the ranges of the values described later.

Examples of a method for obtaining the polyurethane resin for measuring the viscosity from the polyurethane resin dispersion include the following methods.

When components other than the polyurethane resin constituting the polyurethane resin dispersion (including a neutralizer for the polyurethane resin described later) are volatile components, a polyurethane resin can be obtained by volatilizing the components other than the polyurethane resin by heating or the like.

When the polyurethane resin dispersion contains a nonvolatile component, a polyurethane resin can be obtained by purifying the polyurethane resin by known chromatography using a volatile solvent as a mobile phase, and then removing the volatile solvent and the like by heating or the like.

When the neutralizer for the polyurethane resin described later is non-volatile, a polyurethane resin can be obtained by subjecting the neutralizer to a salt exchange reaction with a volatile base, and then removing components other than the polyurethane resin by the above method.

From the viewpoint of adjusting the viscosity of the polyurethane resin to fall in the above-described viscosity, the urethane group content of the polyurethane resin constituting the urethane resin dispersion (A) is preferably 1.0 to 3.5 mmol/g based on the mass of the polyurethane resin.

From the viewpoint of adjusting the viscosity of the polyurethane resin to fall in the above-described viscosity, the urea group content of the polyurethane resin constituting the urethane resin dispersion (A) is preferably 0.8 mmol/g or less based on the mass of the polyurethane resin.

The urea group content in the polyurethane resin can be adjusted to a desired range by appropriately adjusting the amino group content, the moisture content, and the isocyanate group content in the starting materials.

The urea group content is calculated from the N atom content quantified by a nitrogen analyzer, the ratio of urethane groups to urea groups quantified by $^1$H-NMR, and the contents of allophanate groups and biuret groups.

In the present invention, from the viewpoint of film formability and water resistance of a resulting film, the sum total of the contents of the allophanate groups and the biuret groups in the polyurethane resin is preferably 0.1 mmol/g or less, more preferably 0.03 mmol/g or less, particularly preferably 0.01 mmol/g or less, especially preferably 0.003 mmol/g or less, and most preferably 0.001 mmol/g or less based on the mass of the polyurethane resin.

The sum total of the contents of the allophanate groups and the biuret groups in the polyurethane resin can be adjusted to a desired range by appropriately adjusting the amino group content in the starting materials of the polyurethane

resin, the ratio of the equivalent of the isocyanate group to the equivalent of the hydroxyl group and the amino group, the urethanization reaction temperature, etc. In particular, generation of allophanate groups and biuret groups can be suppressed by adjusting the reaction temperature to not lower than 120°C and not higher than 180°C.

The contents of the allophanate groups and the biuret groups are measured by gas chromatography.

The urethane group content of the polyurethane resin can be adjusted to a desired range by appropriately adjusting the amounts of the active hydrogen component (a) and the organic polyisocyanate component (b).

The urethane group content is calculated from the N atom content quantified by a nitrogen analyzer, the ratio of urethane groups to urea groups quantified by $^1$H-NMR, and the contents of allophanate groups and biuret groups.

The Mn of the polyurethane resin is preferably 1,500 to 8,000, more preferably 2,000 to 7,000, and particularly preferably 2,000 to 5,000 from the viewpoint of adjusting the viscosity of the polyurethane resin to fall in the above-described viscosity.

The Mn of the polyurethane resin can be adjusted to a desired range by appropriately adjusting the amounts of the active hydrogen component (a) and the organic polyisocyanate component (b).

The Mn can be measured by gel permeation chromatography (GPC). In the GPC measurement, when the solubility of the polyurethane resin in the solvent used for the measurement is less than 90%, the measurement accuracy of GPC decreases. In that case, since it is difficult to accurately measure the molecular weight, the molecular weight of the polyurethane resin was considered to be infinite.

The polyurethane resin constituting the urethane resin dispersion (A) preferably has a hydroxyl group as described above.

The polyurethane resin constituting the urethane resin dispersion (A) preferably has a hydroxyl value of 15 to 100 mg KOH/g.

Examples of the hydroxyl group which may be contained in the polyurethane resin constituting the urethane resin dispersion (A) include a hydroxyl group derived from the active hydrogen component (a), and the hydroxyl value can be adjusted to fall in the above-mentioned preferable range by adjusting the amounts of the active hydrogen component (a) and the organic polyisocyanate component (b).

The polyurethane resin constituting the urethane resin dispersion (A) preferably has an acid group as described above. The acid value of the polyurethane resin is preferably 5 to 18 mg KOH/g, more preferably 5 to 15 mg KOH/g, and still more preferably 5 to 10 mg KOH/g from the viewpoint of water-resistant adhesiveness.

Examples of the acid group which the polyurethane resin constituting the urethane resin dispersion (A) may have include an acid group derived from the compound having an acid group and active hydrogen (a3), and the acid value can be adjusted to fall in the above preferable range by adjusting the amount of the compound having an acid group and active hydrogen (a3).

In the present description, the acid value and hydroxyl value of the polyurethane resin constituting the urethane resin dispersion (A) can be measured in accordance with JIS K 0070 (1992).

The mass ratio of the insoluble component generated when the polyurethane resin and acetone of 25°C having a mass 10 times the mass of the polyurethane resin are stirred at 80°C for 180 minutes in a sealed state is preferably 5% by mass or less based on the mass of the polyurethane resin constituting the urethane resin dispersion (A).

As a method for measuring the mass ratio of the insoluble component, the following method can be used.

<Method for measuring mass ratio of insoluble component>

W g (e.g., 1 g) of a polyurethane resin is charged together with a stirrer chip having a length of 3 cm in a pressure-resistant sealed container having an inner diameter of 6 cm and a depth of 12 cm, acetone having a mass 10 times that of the polyurethane resin (10 g when W is 1 g) is added, and the mixture is heated at 80°C for 180 minutes to afford a mixed liquid.

The resulting mixed liquid is filtered through an SUS mesh (mesh size: 75 μm) whose mass (W1) has been measured in advance, and then the filtration residue is washed with acetone (the same mass as acetone charged in the pressure-resistant sealed container). The filtration residue and the SUS mesh are dried at 105°C for 30 minutes, and then the total mass (W2) thereof is measured. The amount of the insoluble component is calculated by the following equation.

$$\text{Mass ratio (\%) of insoluble component} = (W2 - W1)/W \times 100$$

As a method for obtaining the polyurethane resin for measuring the mass ratio of the insoluble component from the polyurethane resin dispersion (A), the above-described "method for obtaining polyurethane resin for measuring viscosity from polyurethane resin dispersion (A)" or the like can be used.

The mass ratio of the insoluble component can be adjusted to fall in the above range by using polytetramethylene

ether glycol, which is a high-molecular polyol (a1), as the active hydrogen component (a), adjusting the urethane group content and the urea group content to preferable values described above, and, regarding the active hydrogen component (a) and the organic polyisocyanate component (b) constituting the polyurethane resin, adjusting the equivalent ratio of isocyanate groups/active hydrogen to a preferable value (0.6 to 0.95) described later, adjusting the molecular weights to preferable values described above, and adjusting the acid values to values described above.

In the polyurethane resin dispersion (A), at least part of the acid groups of the polyurethane resin may be neutralized, as necessary. Here, the acid group of the polyurethane resin is preferably an acid group derived from the compound having the above-described acid group (e.g., a carboxyl group) (a3).

Examples of the neutralizer to be used for neutralizing the acid group derived from the compound (a3) include ammonia, amine compounds having 1 to 20 carbon atoms, and hydroxides of alkali metals (e.g., sodium, potassium, and lithium).

Examples of the amine compound having 1 to 20 carbon atoms include primary amines (e.g., monomethylamine, monoethylamine, monobutylamine, monoethanolamine, and 2-amino-2-methyl-1-propanol), secondary amines (e.g., dimethylamine, diethylamine, dibutylamine, diethanolamine, and N-methyldiethanolamine), and tertiary amines (e.g., trimethylamine, triethylamine, dimethylethylamine, and triethanolamine).

Among them, amine compounds having a low vapor pressure at 25°C are preferable from the viewpoint of odor of the aqueous dispersion and water resistance of a resulting film, and triethylamine, monoethanolamine, diethanolamine, and N-methyldiethanolamine are more preferable.

The polyurethane resin dispersion (A) can be produced by dispersing a polyurethane resin in water.

The polyurethane resin dispersion (A) of the present invention can be produced, by the following method (1), (2), (3), or the like, while accompanied by the production of a polyurethane resin.

(1) A method in which the active hydrogen component (a) and the organic polyisocyanate component (b) are mixed at once, and after an urethanization reaction, the neutralizer described above is mixed, and the resultant is dispersed in an aqueous medium.

(2) A method in which the active hydrogen component (a) and the organic polyisocyanate component (b) are mixed at once, the mixture is dispersed in water and then subjected to an urethanization reaction, and the neutralizer described above is mixed.

(3) A method in which a urethane prepolymer having an isocyanate group at a terminal obtained by reacting an active hydrogen component (a) [(a1) to (a3) and the like] with an organic polyisocyanate component (b) is mixed with the neutralizer described above at a prescribed mass ratio, the mixture is dispersed in water, then the urethane prepolymer is subjected to an extension reaction using a chain extender (a4), and, as necessary, a stop reaction with a reaction terminator (a5) is performed.

In the above, from the viewpoint of the dispersibility of the urethane resin in water, it is preferable to use the compound containing a hydrophilic group and an active hydrogen atom (s3) as a component.

In the polyurethane resin dispersion (A) in the present invention, the urethane resin may be dispersed in water in the presence of a dispersant, as necessary, from the viewpoint of the dispersibility of the urethane resin and the stability of the aqueous dispersion.

Examples of the dispersant include nonionic surfactants, anionic surfactants, cationic surfactants, amphoteric surfactants, and other emulsifying dispersants. Dispersants may be used singly, or two or more of them may be used in combination.

Examples of the nonionic surfactant include AO addition type nonionic surfactants and polyhydric alcohol type nonionic surfactants. Examples of the AO addition type nonionic surfactant include an EO adduct of an aliphatic alcohol having 10 to 20 carbon atoms, an EO adduct of phenol, an EO adduct of nonylphenol, an EO adduct of an alkylamine having 8 to 22 carbon atoms, and an EO adduct of polypropylene glycol, and examples of the polyhydric alcohol type nonionic surfactants include a fatty acid (having 8 to 24 carbon atoms) ester of a polyhydric (3 to 8 valent or higher) alcohol (having 2 to 30 carbon atoms) (e.g., glycerin monostearate, glycerin monooleate, sorbitan monolaurate, and sorbitan monooleate) and an alkyl (having 4 to 24 carbon atoms) poly (having a polymerization degree of 1 to 10) glycoside.

Examples of the anionic surfactant include ether carboxylic acids having a hydrocarbon group having 8 to 24 carbon atoms or salts thereof [e.g., sodium lauryl ether acetate and sodium (poly)oxyethylene (number of added moles: 1 to 100) lauryl ether acetate]; sulfuric acid esters or ether sulfuric acid esters having a hydrocarbon group having 8 to 24 carbon atoms and salts thereof [e.g., sodium lauryl sulfate, sodium (poly)oxyethylene (number of added moles: 1 to 100) lauryl sulfate, triethanolamine (poly)oxyethylene (number of added moles: 1 to 100) lauryl sulfate, and sodium (poly)oxyethylene (number of added moles: 1 to 100) coconut oil fatty acid monoethanolamide sulfate]; sulfonate salts having a hydrocarbon group having 8 to 24 carbon atoms [e.g., sodium dodecylbenzenesulfonate]; sulfosuccinate salts having 1 or 2 hydrocarbon groups having 8 to 24 carbon atoms; phosphoric acid esters or ether phosphoric acid esters having a hydrocarbon group having 8 to 24 carbon atoms and salts thereof [e.g., sodium lauryl phosphate and sodium

(poly)oxyethylene (number of added moles: 1 to 100) lauryl ether phosphate]; fatty acid salts having a hydrocarbon group with 8 to 24 carbon atoms [e.g., sodium laurate and triethanolamine laurate]; and acylated amino acid salts having a hydrocarbon group having 8 to 24 carbon atoms [e.g., sodium methyl cocoyl taurate, sodium cocoyl sarcosine, triethanolamine cocoyl sarcosinate, triethanolamine N-cocoyl-L-glutamate, sodium N-cocoyl-L-glutamate, and sodium lauroylmethyl-β-aminopropionate].

Examples of the cationic surfactant include quaternary ammonium salt type cationic surfactants [e.g., stearyltrimethylammonium chloride, behenyltrimethylammonium chloride, distearyldimethylammonium chloride, and (lanolin fatty acid aminopropyl)ethyldimethylammonium ethylsulfate], and amine salt type cationic surfactants [e.g., stearic acid diethylaminoethylamide lactate, dilaurylamine hydrochloride, and oleylamine lactate].

Examples of the amphoteric surfactant include betaine-type amphoteric surfactants [cocamidopropyl betaine, lauryl dimethylaminoacetic acid betaine, 2-alkyl-N-carboxymethyl-N-hydroxyethylimidazolinium betaine, lauryl hydroxysulfobetaine, and lauroyl amidoethyl hydroxyethyl carboxymethyl betaine sodium hydroxypropyl phosphate], and amino acid type amphoteric surfactants [e.g., sodium β-laurylaminopropionate] .

Examples of other emulsifying dispersants include polyvinyl alcohol, starch and derivatives thereof, cellulose derivatives such as carboxymethyl cellulose, methyl cellulose, and hydroxyethyl cellulose, carboxyl group-containing (co)polymers such as sodium polyacrylate, and emulsifying dispersants having a urethane group or an ester group described in U.S. Patent No. 5906704 [e.g., products prepared by linking polycaprolactone polyol with polyether diol using polyisocyanate].

The dispersant may be added at any of before the urethanization reaction of the urethane resin, during the urethanization reaction, after the urethanization reaction, before the step of dispersion in water, during the dispersion in water, or after the dispersion in water, but from the viewpoint of the dispersibility of the urethane resin and the stability of the aqueous dispersion, the dispersant is preferably added before the dispersion in water or during the dispersion in water.

The content of the dispersant is preferably 0.01 to 20% by mass, more preferably 0.01 to 10% by mass, and particularly preferably 0.1 to 5% by mass, based on the mass of the polyurethane resin.

The total mass of the structural unit derived from (a3) and the dispersant in the urethane resin is preferably 0.01 to 20% by mass, more preferably 0.1 to 15% by mass, and particularly preferably 0.6 to 10% by mass, based on the mass of the urethane resin.

The polyurethane resin dispersion (A) in the present invention may comprise an organic solvent [e.g., ketone-based solvents (e.g., acetone and methyl ethyl ketone), ester-based solvents (e.g., ethyl acetate), ether-based solvents (e.g., tetrahydrofuran), amide-based solvents (e.g., N,N-dimethylformamide and N-methylpyrrolidone), alcohol-based solvents (e.g., isopropyl alcohol), and aromatic hydrocarbon-based solvents (e.g., toluene)].

In the present invention, the polyurethane resin and the urethane prepolymer are obtained by heating and reacting the active hydrogen component (a) and the organic polyisocyanate component (b) in a heatable facility. Examples of such a method include a method in which starting materials of a urethane resin or a urethane prepolymer are charged into a vessel, uniformly stirred, and then heated in a heating dryer or a heating furnace without stirring, and a method in which starting materials are heated and reacted with stirring or kneading in a simple compression reaction apparatus (autoclave), a flask, a single-screw or twin-screw kneading machine, a plastomill, a universal kneading machine, or the like. Among them, a method in which the reaction is performed by heating with stirring or kneading is preferable because the homogeneity of a resulting polyurethane resin is increased, and the mechanical properties, durability, chemical resistance, abrasion resistance, and the like of a resulting film tend to be better.

The polyurethane resin is preferably reacted at a ratio such that the equivalent ratio of isocyanate groups/active hydrogen is 0.6 to 0.95.

When the active hydrogen component (a) and the organic polyisocyanate component (b) are reacted to produce the polyurethane resin, the mass ratio of water in the reaction system is preferably 0.90% by mass or less based on the mass of the polyurethane resin from the viewpoint of adjusting the urea group content to the above preferable value.

From the viewpoint of the contents of the allophanate groups and the biuret groups of the polyurethane resin, the reaction temperature during the production of the polyurethane resin and the urethane prepolymer is preferably 60 to 120°C or 180 to 250°C, more preferably 60 to 110°C or 180 to 240°C, and most preferably 60 to 100°C or 180 to 230°C.

The time for which the urethane resin and the urethane prepolymer are produced can be appropriately chosen depending on the equipment to be used, and is preferably 1 minute to 100 hours, more preferably 3 minutes to 30 hours, and particularly preferably 5 minutes to 20 hours. In this range, a urethane resin capable of sufficiently exhibiting the effect of the present invention is obtained.

In order to control the urethanization reaction rate, a known reaction catalyst (tin octylate, bismuth octylate, etc.), a reaction retarder (phosphoric acid, etc.), and the like can be used. The amount of the catalyst or reaction retarders to be added is preferably 0.001 to 3% by mass, more preferably 0.005 to 2% by mass, and particularly preferably 0.01 to 1% by mass, based on the mass of the urethane resin.

As the apparatus for dispersing the polyurethane resin or the urethane prepolymer in water, any apparatus

having a dispersing ability can be used, but from the viewpoint of temperature adjustment, an ability of supplying and dispersing a granular or block resin, and the like, it is preferable to use a rotary dispersion mixer, an ultrasonic disperser, or a kneading machine, and among them, a rotary dispersion mixer having an excellent dispersing ability is further preferable.

The main dispersion principle of the rotary dispersion mixer is that a shear force is applied from the outside to a material to be processed by rotation of the drive unit or the like to atomize and disperse the material. The rotary dispersion mixer may be operated under normal pressure, reduced pressure, or increased pressure.

Examples of the rotary dispersion mixer include a mixer having a common stirring blade such as MAXBLEND and a helical blade, TK homomixer [manufactured by PRIMIX Corporation], CLEARMIX [manufactured by M Technique Co., Ltd.], FILMIX [manufactured by PRIMIX Corporation], ULTRA-TURRAX [manufactured by IKA], Ebara Milder [manufactured by Ebara Corporation], CAVITRON (manufactured by EUROTEC LIMITED), and BIOMIXER [manufactured by Nippon Seiki Co., Ltd.].

The rotation speed taken when the polyurethane resin or the urethane prepolymer is subjected to dispersion treatment using a rotary dispersion mixer is preferably 10 to 30000 rpm, more preferably 20 to 20000 rpm, and particularly preferably 30 to 10000 rpm from the viewpoint of dispersing ability.

The main dispersion principle of the ultrasonic disperser is that an energy is applied from the outside to a material to be processed by vibration of the drive unit to atomize and disperse the material. In addition, the ultrasonic disperser can be operated under normal pressure, reduced pressure, or increased pressure.

As the ultrasonic disperser, ultrasonic dispersers commercially available from Ikemoto Rika Kogyo Co., Ltd., Cosmo Bio Co., Ltd., Ginsen Co., Ltd., etc. can be used.

The frequency at the time of dispersing the polyurethane resin or the urethane prepolymer using an ultrasonic disperser is preferably 1 to 100 kHz, more preferably 3 to 60 kHz, and particularly preferably 10 to 30 kHz from the viewpoint of the dispersing ability.

The main dispersing principle of a kneading machine is that a material to be processed is kneaded by a rotation unit of the kneading machine, and thereby an energy is applied to the material to atomize and disperse it. The kneading machine can be operated under normal pressure, reduced pressure, or increased pressure.

Examples of the kneading machine include a twin-screw extruder [PCM-30 manufactured by Ikegai Corp., etc.], a kneader [KRC kneader manufactured by Kurimoto, Ltd., etc.], a universal mixer [HIVIS MIX manufactured by PRIMIX Corporation, etc.], and a plastomill [Labo Plastomill manufactured by Toyo Seiki Seisaku-sho, Ltd., etc.].

The rotation speed taken when the polyurethane resin or the urethane prepolymer is subjected to dispersion treatment using a kneading machine is preferably 1 to 1000 rpm, more preferably 3 to 500 rpm, and particularly preferably 10 to 200 rpm from the viewpoint of dispersing ability.

The mass ratio of the polyurethane resin or the urethane prepolymer to water to be fed to the disperser is appropriately chosen depending on the resin component content of the intended aqueous dispersion, and is preferably [polyurethane resin or urethane prepolymer]/water = 10/2 to 10/100, and more preferably 10/5 to 10/50.

The time for which the polyurethane resin or the urethane prepolymer and water are treated with a disperser is preferably 10 seconds to 10 hours, more preferably 1 minute to 3 hours, and most preferably 10 to 60 minutes from the viewpoint of dispersibility.

When the dispersion is performed with a disperser, one or more additives selected from among a pH adjuster, a defoaming agent, a foam inhibitor, an antioxidant, a coloring inhibitor, a plasticizer, a mold release agent, and the like may be added, as necessary. In addition, as necessary, desolvation, concentration, dilution, and the like may be performed after dispersion.

Examples of the method for neutralizing the polyurethane resin or the urethane prepolymer produced by the reaction with the neutralizer include a method in which the neutralizer is added to a solution containing the polyurethane resin or the urethane prepolymer and stirred at 10 to 50°C for 10 to 180 minutes to neutralize acid groups of the polyurethane resin or the urethane prepolymer.

The apparatus for reacting the chain extender (a4) and the optional reaction terminator (a5) after dispersing the urethane prepolymer is not particularly limited, but it is preferable to perform the reaction while mixing them with the disperser, a static mixer, or the like.

The solid concentration (the content of components other than volatile components) of the polyurethane resin dispersion (A) obtained by the production method of the present invention is preferably 20 to 65% by mass, and more preferably 25 to 55% by mass from the viewpoint of easy handling of the aqueous dispersion. The solid concentration can be determined by thinly stretching about 1 g of the aqueous dispersion on a petri dish, precisely weighing the dispersion, then precisely weighing the mass after heating at 130°C for 45 minutes using a circulating constant temperature dryer, and calculating the ratio (percentage) of the residual mass after heating to the mass before heating.

The dispersion viscosity of the polyurethane resin dispersion (A) obtained by the production method of the present invention is preferably 10 to 100,000 mPa•s, and more preferably 10 to 5,000 mPa•s. The dispersion viscosity can be measured at a constant temperature of 25°C using a BL type viscometer.

The pH of the polyurethane resin dispersion (A) obtained by the production method of the present invention is preferably 2 to 12, and more preferably 4 to 10. The pH can be measured at 25°C using a pH Meter M-12 [manufactured by HORIBA, Ltd.].

The amount of the polyurethane resin dispersion (A) contained in the aqueous coating composition is preferably 10 to 80 parts by mass, more preferably 20 to 75 parts by mass, and still more preferably 25 to 70 parts by mass, based on 100 parts by mass of the total resin solid content. When the amount of the polyurethane resin dispersion (A) is in the above range, there is an advantage that viscosity change is small and good coating workability is more favorably exhibited.

Melamine resin (B)

The aqueous coating composition comprises a melamine resin (B). The melamine resin (B) is a component that functions as a curing agent in the aqueous coating composition. The melamine resin (B) has a structure in which groups $R^1$ to $R^6$ are bonded to the periphery of a melamine nucleus (triazine nucleus) via three nitrogen atoms as represented by the following formula (1). The melamine resin is generally composed of a polynuclear body in which a plurality of melamine nuclei are bonded to each other. Alternatively, the melamine resin may be a mononuclear body composed of a single melamine nucleus. The structure of the melamine nucleus constituting the melamine resin can be represented by the following Formula (1).

[Chemical Formula 1]

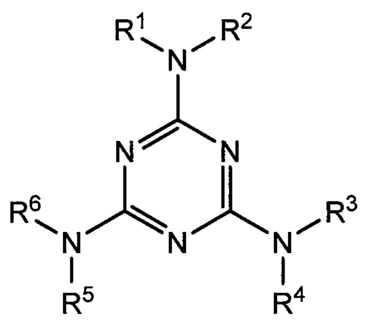

Formula (1)

In the above Formula (1), $R^1$ to $R^6$ each represent a hydrogen atom (imino group), $CH_2OH$ (methylol group), $CH_2OR^7$, or a bonding moiety with another melamine nucleus, which may be the same or different. $R^7$ is an alkyl group, preferably an alkyl group having 1 to 4 carbon atoms such as a methyl group, an ethyl group, a propyl group, or a butyl group.

Generally, melamine resins can be roughly classified into water-soluble melamine resins and hydrophobic melamine resins. Here, the water-soluble melamine resin satisfies all of the following conditions (i) to (iii).

(i) The melamine resin has a number average molecular weight of 1,000 or less.

(ii) Among $R^1$ to $R^6$ in the above Formula (1), at least one is a hydrogen atom (imino group) or $CH_2OH$ (methylol group). That is, the total of the average imino group amount and the average methylol group amount is 1.0 or more.

(iii) Among $R^1$ to $R^6$ in the above Formula (1), when $R^1$ to $R^6$ are $CH_2OR^7$, $R^7$ is a methyl group.

The number average molecular weight of the melamine resin is a value measured by GPC. More specifically, it is a value obtained by converting a value measured by a gel permeation chromatography (GPC) with a polystyrene standard.

The hydrophobic melamine resin is a melamine resin other than the water-soluble melamine resin. That is, those satisfying any of the following conditions (iv) to (vi) are applicable.

(iv) The number average molecular weight of the melamine resin is more than 1,000.

(v) The total of the average imino group amount and the average methylol group amount is 1.0 or less.

(vi) Among $R^1$ to $R^6$ in the above Formula (1), two or more of $R^1$ to $R^6$ are $CH_2OR^7$, $R^7$ is an alkyl group having 1 to 4 carbon atoms, provided that at least one of $R^7$s constituting $R^1$ to $R^6$ is an alkyl group having 2 to 4 carbon atoms.

The melamine resin (B) comprises a hydrophobic melamine resin. The melamine resin (B) is more preferably a hydrophobic melamine resin. The use of the hydrophobic melamine resin offers an advantage that the occurrence of mix of layers during wet-on-wet application can be effectively prevented.

As the melamine resin (B), a commercially available product may be used. Specific examples of the commercially available products include CYMEL Series (trade name) manufactured by Allnex, specifically,

CYMEL 202, CYMEL 204, CYMEL 211, CYMEL 232, CYMEL 235, CYMEL 236, CYMEL 238, CYMEL 250, CYMEL 251, CYMEL 254, CYMEL 266, CYMEL 267, CYMEL 285 (these are melamine resins having both a methoxy group and a butoxy group);

MYCOAT 506 (manufactured by Mitsui Cytec Ltd., a melamine resin having a butoxy group alone); and U-VAN 20N60 and U-VAN 20SE (U-VAN (trade name) Series manufactured by Mitsui Chemicals, Inc.).

These may be used singly, or two or more of them may be used in combination. Of these, CYMEL 202, CYMEL 204, CYMEL 211, CYMEL 250, CYMEL 254, and MYCOAT 212 are more preferable.

The amount of the melamine resin (B) contained in the aqueous coating composition is preferably 10 to 60 parts by mass, and more preferably 20 to 50 parts by mass, based on 100 parts by mass of the total resin solid content. The condition that the amount of the melamine resin (B) is in the above range is advantageous in that a good curing performance of the aqueous coating composition can be secured.

Other resin components

The aqueous coating composition may comprise other resin component, as necessary. Examples of such other resin component include an acrylic resin and a polyester resin dispersion.

Acrylic resin

As necessary, the aqueous coating composition may further comprise one or more ingredient selected from the group consisting of an acrylic resin and a polyester resin dispersion, which are coating film-forming resins. The acrylic resin may be an acrylic resin emulsion or an acrylic resin dispersion.

The acrylic resin emulsion can be prepared by polymerization of various polymerizable monomers. The polymerizable monomer refers to a monomer having at least one unsaturated bond such as a vinyl group in the molecule, and includes a derivative of acrylic acid or methacrylic acid. The polymerizable monomer is not particularly limited, and examples thereof include:

ethylenically unsaturated carboxylic acid monomers such as (meth)acrylic acid, maleic acid, and itaconic acid;
ethylenically unsaturated carboxylic acid alkyl ester monomers such as methyl (meth)acrylate, ethyl (meth)acrylate, n-butyl (meth)acrylate, 2-ethylhexyl (meth)acrylate, cyclopentyl (meth)acrylate, and cyclohexyl (meth)acrylate;
ethylenically unsaturated dicarboxylic acid monoester monomers such as ethyl maleate, butyl maleate, ethyl itaconate, and butyl itaconate;
hydroxyl group-containing ethylenically unsaturated carboxylic acid alkyl ester monomers such as 2-hydroxyethyl (meth)acrylate, 2-hydroxypropyl (meth)acrylate, 4-hydroxybutyl (meth)acrylate, and a reaction product of 2-hydroxyethyl (meth)acrylate and ε-caprolactone;
ethylenically unsaturated carboxylic acid aminoalkyl ester monomers such as aminoethyl (meth)acrylate, dimethylaminoethyl (meth)acrylate, and butylaminoethyl (meth)acrylate;
ethylenically unsaturated carboxylic acid aminoalkylamide monomers such as aminoethyl (meth)acrylamide, dimethylaminomethyl (meth)acrylamide, and methylaminopropyl (meth)acrylamide;
other amide group-containing ethylenically unsaturated carboxylic acid monomers such as acrylamide, methacrylamide, dimethylacrylamide, diethylacrylamide, acryloylmorpholine, isopropylacrylamide, N-methylolacrylamide, methoxybutylacrylamide, and diacetone acrylamide;
unsaturated fatty acid glycidyl ester monomers such as glycidyl acrylate and glycidyl methacrylate;
vinyl cyanide-based monomers such as (meth)acrylonitrile and α-chloracrylonitrile;
saturated aliphatic carboxylic acid vinyl ester monomers such as vinyl acetate and vinyl propionate; and
styrene-based monomer such as styrene, α-methylstyrene, and vinyltoluene.

These may be used singly, or two or more of them may be used in combination.

In the present description, (meth)acrylic acid refers to acrylic acid or methacrylic acid.

The acrylic resin emulsion can be prepared, for example, by copolymerizing a monomer mixture comprising an ethylenically unsaturated carboxylic acid monomer and another monomer copolymerizable with the ethylenically unsaturated carboxylic acid monomer.

The acrylic resin emulsion can be prepared, for example, by a method in which a polymer to form an acrylic

resin is formed by emulsion polymerization in an aqueous solvent in the presence of an emulsifier and a polymerization initiator.

Examples of the emulsifier that can be used for the emulsion polymerization include anionic emulsifiers such as soap, alkylsulfonate salts, and polyoxyethylene alkyl sulfate salts. Further, nonionic emulsifiers such as polyoxyethylene alkyl ethers, polyoxyethylene alkylphenyl ethers, polypropylene glycol ethylene oxide adducts, polyethylene glycol fatty acid esters, and polyoxyethylene sorbitan fatty acid esters can also be used.

As the emulsifier, a surfactant having a radically polymerizable carbon-carbon double bond (hereinafter, referred to as a reactive emulsifier) can also be used. Examples of the reactive emulsifier include a nonionic surfactant having a polyoxyethylene alkylphenyl ether as a basic structure and a radically polymerizable propenyl group introduced into a hydrophobic group, a cationic surfactant having a quaternary ammonium salt structure, and an anionic surfactant containing a sulfonic acid group, a sulfonate group, a sulfate ester group, and/or an ethyleneoxy group and having a radically polymerizable carbon-carbon double bond.

As the emulsifier, commercially available products thereof may be used. Examples of commercially available emulsifiers include Aqualon HS series (manufactured by DKS Co. Ltd.) such as Aqualon HS-10; Aqualon RN series (manufactured by DKS Co. Ltd.); Eleminol JS-2 (manufactured by Sanyo Chemical Industries, Ltd.); LATEMUL Series (manufactured by Kao Corporation) such as LATEMUL S-120, S-180A, and PD-104, and EMULGEN Series (manufactured by Kao Corporation) such as EMULGEN 109P; Newcol series (manufactured by Nippon Nyukazai Co., Ltd.) such as Newcol 706 and 707SN; Antox series (manufactured by Nippon Nyukazai Co., Ltd.) such as Antox MS-2N (2-sodium sulfoethyl methacrylate); and ADEKA REASOAP Series (manufactured by ADEKA CORPORATION) such as ADEKA REASOAP NE-10 ($\alpha$-[1-[(allyloxy)methyl]-2-(nonylphenoxy)ethyl]-$\omega$-hydroxypolyoxyethylene).

Emulsifiers may be used singly, or two or more of them may be used in combination. When an emulsifier is used, the amount of the emulsifier used is preferably 0.5 to 10 parts by mass in terms of solid content relative to 100 parts by mass of the polymerizable monomer.

In the preparation of the acrylic resin emulsion by emulsion polymerization, it is preferable to use a polymerization initiator. The polymerization initiator generates a radical by heat or a reducing substance or the like to addition-polymerize monomers, and a water-soluble polymerization initiator or an oil-soluble polymerization initiator can be used. The water-soluble polymerization initiator is not particularly limited, and examples thereof include persulfate salt-based initiators such as ammonium persulfate, sodium persulfate, and potassium persulfate, and inorganic initiators such as hydrogen peroxide. The oil-soluble polymerization initiator is not particularly limited, and examples thereof include organic peroxides such as benzoyl peroxide, t-butyl peroxybenzoate, t-butyl hydroperoxide, t-butyl peroxy(2-ethylhexanoate), t-butyl peroxy-3,5,5-trimethylhexanoate, and di-t-butyl peroxide; and azobis compounds such as 2,2'-azobisisobutyronitrile, 2,2'-azobis-2,4-dimethylvaleronitrile, 2,2'-azobis(4-methoxy-2,4-dimethylvaleronitrile), and 1,1'-azobis-cyclohexane-1-carbonitrile. These may be used singly, or two or more of them may be used in combination.

The amount of the polymerization initiator to be used is preferably 0.01 to 10% by mass based on the total amount of monomers to be used for polymerization. The polymerization temperature in the emulsion polymerization is, for example, 30 to 90°C, and the polymerization time is, for example, 3 to 12 hours. The monomer concentration during the polymerization reaction is, for example, 30 to 70% by mass.

The acrylic resin emulsion may have a multilayer structure composed of a core part and a shell part. The acrylic resin emulsion having such a multilayer structure can be prepared, for example, by a known production method described in JP-A-2002-12816.

The acrylic resin emulsion may also be prepared by mixing a mixture of polymerizable monomers, an emulsifier, and an aqueous medium before emulsion polymerization to prepare a pre-reaction emulsified mixture. In the case of preparing a pre-reaction emulsified mixture, emulsion polymerization can be performed by mixing the pre-reaction emulsion mixture and a polymerization initiator in an aqueous medium.

After the emulsion polymerization, neutralization may be performed using a neutralizer, as necessary. As the neutralizer, an inorganic base and/or an organic base can be used. Specific examples of the inorganic base or the organic base include ammonia, triethylamine, propylamine, dibutylamine, amylamine, 1-aminooctane, 2-dimethylaminoethanol, ethylaminoethanol, 2-diethylaminoethanol, 1-amino-2-propanol, 2-amino-1-propanol, 2-amino-2-methyl-1-propanol, 3-amino-1-propanol, 1-dimethylamino-2-propanol, 3-dimethylamino-1-propanol, 2-propylaminoethanol, ethoxypropylamine, aminobenzyl alcohol, morpholine, sodium hydroxide, and potassium hydroxide. Neutralizers may be used singly, or two or more of them may be used in combination. The amount of the neutralizer to be used is preferably usually 0.2 to 1.0 mol (neutralization ratio: 20 to 100%), per mol of the carboxyl groups in the copolymer.

The acrylic resin emulsion preferably has an acid value of 5 to 200 mg KOH/g, and more preferably 5 to 70 mg KOH/g. When the acid value is in the above range, the stability of the resin emulsion in water and the water resistance of a coating film can be balanced. In the present description, the acid value represents a solid acid value, and can be measured by a known method described in JIS K0070.

The acrylic resin emulsion preferably has a hydroxyl value of 0 to 85 mg KOH/g, and more preferably 0 to 40 mg KOH/g. The fact that the hydroxyl value is 85 mg KOH/g or less offers an advantage that the water resistance of a

coating film can be secured. In the present description, the hydroxyl value represents a solid hydroxyl value, and can be measured by a known method described in JIS K0070.

The acrylic resin may be an acrylic resin dispersion. The acrylic dispersion can be prepared, for example, by a method in which a monomer mixture comprising the monomers described above is solution-polymerized in an organic solvent using a radical polymerization initiator, and then the resulting polymer solution is neutralized with a neutralizer and subjected to phase transition with water.

Specific examples of the radical polymerization initiator that can be used for solution polymerization include azobisisobutyronitrile, benzoyl peroxide, t-butyl perbenzoate, t-butyl hydroperoxide, di-t-butyl peroxide, and cumene hydroperoxide. Radical polymerization initiators may be used singly, or two or more of them may be used in combination. The molecular weight of the resin may, as necessary, be adjusted using a chain transfer agent such as octyl mercaptan or dodecyl mercaptan.

As the neutralizer to be used for neutralizing the polymer obtained by solution polymerization, the above-described neutralizer can be used. The amount of the neutralizer to be used is preferably usually 0.2 to 1.0 mol (neutralization ratio: 20 to 100%), per mol of the carboxyl groups in the copolymer.

The acrylic resin dispersion preferably has an acid value of 5 to 200 mg KOH/g, and more preferably 5 to 70 mg KOH/g. The acrylic resin dispersion preferably has a hydroxyl value of 0 to 85 mg KOH/g, and more preferably 0 to 40 mg KOH/g.

The acrylic resin dispersion may have a core-shell structure. The acrylic resin dispersion having a core-shell structure can be produced via:

a step of solution-polymerizing a core part preparation monomer to form a core part of an acrylic resin dispersion;
a step of solution-polymerizing a shell part preparation monomer comprising an acid group-containing polymerizable monomer in the presence of the obtained core part to form a shell part of an acrylic resin dispersion;
a step of desolvating the obtained solution-polymerized product and neutralizing it with a neutralizer such as a base compound; and
a step of mixing the neutralized polymerized product with an aqueous medium and dispersing the polymerized product in the aqueous medium.

When the aqueous coating composition comprises an acrylic resin, the content of the acrylic resin is preferably in a range of 1 to 30 parts by mass, and more preferably in a range of 3 to 25 parts by mass, based on 100 parts by mass of the total resin solid content.

As the polyester resin dispersion, for example, a dispersion of a polyester resin having two or more hydroxyl groups in one molecule, which is called a polyester polyol, can be suitably used. The condition that the aqueous coating composition comprises the polyester resin dispersion is advantageous in that the coating workability is improved and the appearance of a resulting coating film is improved. Such a polyester resin is prepared by making a polyhydric alcohol and a polybasic acid or an anhydride thereof undergo polycondensation (an esterification reaction), and a polyester resin dispersion can be prepared by mixing and stirring the resulting polyester resin with a basic compound and an aqueous medium.

Examples of a polyhydric alcohol that can be used in the preparation of the polyester resin include ethylene glycol, diethylene glycol, polyethylene glycol, propylene glycol, dipropylene glycol, polypropylene glycol, neopentyl glycol, 1,2-butanediol, 1,3-butanediol., 2,3-butanediol, 1,4-butanediol, 1,5-pentanediol, 1,6-hexanediol, hydrogenated bisphenol A, hydroxyalkylated bisphenol A, 1,4-cyclohexanedimethanol, 2,2-dimethyl-3 -hydroxypropyl-2,2-dimethyl-3 - hydroxypropionate, 2,2,4-trimethyl-1,3-pentanediol, N,N-bis-(2-hydroxyethyl)dimethylhydantoin, polytetramethylene ether glycol, polycaprolactone polyol, glycerin, sorbitol, trimethylolethane, trimethylolpropane, trimethylolbutane, hexanetriol, pentaerythritol, dipentaerythritol, and tris-(hydroxyethyl) isocyanate. These polyhydric alcohols may be used singly, or two or more of them may be used in combination.

Examples of a polybasic acid or an anhydride thereof include phthalic acid, phthalic anhydride, tetrahydrophthalic acid, tetrahydrophthalic anhydride, hexahydrophthalic acid, hexahydrophthalic anhydride, methyltetrahydrophthalic acid, methyltetrahydrophthalic anhydride, hymic anhydride., trimellitic acid, trimellitic anhydride, pyromellitic acid, pyromellitic anhydride, isophthalic acid, terephthalic acid, maleic acid, maleic anhydride, fumaric acid, itaconic acid, adipic acid, azelaic acid, sebacic acid, succinic acid, succinic anhydride, lactic acid, dodecenylsuccinic acid, dodecenylsuccinic anhydride, cyclohexane-1,4-dicarboxylic acid, and endic anhydride. These polybasic acids or anhydrides thereof may be used singly, or two or more of them may be used in combination.

As the polyester resin dispersion, a dispersion of a polyester resin modified with a lactone, an oil or fat, a fatty acid, melamine resin, urethane resin, or the like can also be used. For example, the dispersion of a polyester resin modified with an oil or fat or a fatty acid is a polyester resin modified using an oil or fat such as castor oil, dehydrated castor oil, coconut oil, corn oil, cottonseed oil, linseed oil, perilla oil, poppy oil, safflower oil, soybean oil, and tung oil, or a fatty acid extracted from these oils and fats. In the production of the fat, oil or fatty acid-modified polyester resin, it is

preferable to add the above-mentioned fat or oil and/or fatty acid in an amount up to about 30 parts in total by mass based on 100 parts by mass of the polyester resin.

The polyester resin dispersion preferably has a number average molecular weight of 800 to 10000, and more preferably 1000 to 8000 in terms of polystyrene determined by GPC measurement.

The polyester resin dispersion preferably has a solid hydroxyl value of 20 to 350 mg KOH/g, more preferably 30 to 300 mg KOH/g, and still more preferably 40 to 200 mg KOH/g.

When the aqueous coating composition comprises a polyester resin dispersion, the content of the polyester resin dispersion is preferably in a range of 10 to 80 parts by mass, and more preferably in a range of 10 to 50 parts by mass, based on 100 parts by mass of the total resin solid content.

## Other components

The aqueous coating composition of the present invention may comprise other components as necessary in addition to the above-described components. Examples of such other components include pigments, film-forming assistants, surface conditioning agents, antiseptic agents, fungicides, defoaming agents, light stabilizers, ultraviolet absorbers, antioxidants, and pH adjusters.

The pigment is not particularly limited, and examples thereof include: organic coloring pigments such as azo chelate pigments, insoluble azo pigments, condensed azo pigments, monoazo pigments, disazo pigments, diketopyrrolopyrrole pigments, benzimidazolone pigments, phthalocyanine pigments, indigo pigments, thioindigo pigments, perinone pigments, perylene pigments, dioxane pigments, quinacridone pigments, isoindolinone pigments, naphthol pigments, pyrazolone pigments, anthraquinone pigments, anthrapyrimidine pigments, and metal complex pigments; inorganic coloring pigments such as chrome yellow, yellow iron oxide, chromium oxide, molybdate orange, red iron oxide, titanium yellow, zinc flower, carbon black, titanium dioxide, cobalt green, phthalocyanine green, ultramarine, cobalt blue, phthalocyanine blue, and cobalt violet; mica pigments (titanium dioxide-coated mica, colored mica, metal-plated mica); graphite pigment, alumina flake pigment, metal titanium flakes, stainless flakes, plate-like iron oxide, phthalocyanine flakes, metal-plated glass flakes, other colored and colored flat pigments; and extender pigments such as titanium oxide, calcium carbonate, barium sulfate, barium carbonate, magnesium silicate, clay, talc, silica, and calcined kaolin.

## Preparation of aqueous coating composition

The method for preparing the aqueous coating composition is not particularly limited, and the aqueous coating composition can be prepared by stirring the above-described components with a stirrer or the like. When a pigment, etc. are contained in the aqueous coating composition, those having good dispersibility can be mixed with a stirrer, and as another method, those previously dispersed in a vehicle comprising water, a surfactant, a dispersant, etc. with a sand grind mill or the like can be added.

The aqueous coating composition is not particularly limited in its application method and drying conditions, and those which are commonly well-known can be applied. The aqueous coating composition can be used for various uses, and it exhibits superior performance especially under normal temperature drying to forced drying conditions. The forced drying generally means heating at about 80°C, but may be heating up to about 150°C, for example.

The article to be coated to which the aqueous coating composition of the present invention is applied is not particularly limited, and examples thereof include metal substrates such as iron, stainless steel and the like and surface-treated products thereof, cement substrates such as gypsum, and plastic substrates such as polyesters and acrylic plastics. Further examples include various articles for construction such as building materials and structures, various articles for the automobile industry such as automobile bodies and parts, and various articles for industrial fields such as electric appliances and electronic parts.

The aqueous coating composition is preferably in an embodiment where regarding the viscosity of a dry coating film of the coating composition, the coating film viscosity $\eta1$ in which the solid content in a dry coating film is 60% by mass and the coating film viscosity $\eta2$ in which the solid content in a dried coating film is 80% by mass satisfy the following condition:

$$1 \leq \eta2/\eta1 \leq 10.$$

The coating film viscosities $\eta1$ and $\eta2$ are shear viscosities measured at a temperature of 25°C, at a shear rate of 0.1 $s^{-1}$ using a rotary viscoelasticity analyzer.

The method of measuring the viscosity by increasing the solid content of an uncured coating material may, for example, be the following method. A coated sheet with an uncured coating film formed thereon is adjusted to have solid contents of 60 ± 3% and 80 ± 3% using, for example, a vacuum desolvation apparatus and the viscosity is measured

at a temperature of 25°C and a shear rate of 0.1 $s^{-1}$ using a rotary viscoelasticity analyzer.

In the present description, for example, "the solid content in a dry coating film is 60% by mass" means that a state where the solid content is 60 ± 3% by mass, and for example, "the solid content in a dry coating film is 80% by mass" means that a state where the solid content is 80 ± 3% by mass.

In the present description, "a dry coating film of a coating composition" means a state where at least a part of the solvent contained in the coating composition has been evaporated after the coating composition has been applied to an article to be coated.

That the coating film viscosities η1 and η2 of the aqueous coating composition satisfy the above conditions means that viscosity change is small even when the solid content in a dry coating film falls in the above range and the amount of the solvent contained in the coating composition decreases. That the viscosity change is small even when the amount of the solvent decreases offers an advantage that a change in coating workability when the viscosity changes can be reduced. Such an aqueous coating composition has an advantage that it exhibits good coating workability even under various coating environments differing in temperatures and/or humidity.

Formation of multilayer coating film

The aqueous coating composition can be suitably used, for example, in the formation of a multilayer coating film. Examples of the method for forming a multilayer coating film include the following method.

A method for forming a multilayer coating film, the method comprising step (1) of applying a first aqueous base coating composition to a surface of an article to be coated to obtain an uncured first aqueous base coating film; step (2) of applying a second aqueous base coating composition to the uncured first aqueous base coating film to form an uncured second aqueous base coating film; step (3) of applying a clear coating composition to the uncured second aqueous base coating film to form an uncured clear coating film; and step (4) of heating and curing the uncured first aqueous base coating film, the uncured second aqueous base coating film, and the uncured clear coating film obtained in the steps (1) to (3) at one time to form a multilayer coating film.

This method for forming a multilayer coating film is a method in which application is sequentially performed with coating films being in an uncured state, and this is a so-called wet-on-wet application method. Wet-on-wet application is advantageous in terms of economy and environmental impact because it can omit a baking drying oven.

In the above forming method, the aqueous coating composition can be suitably used as the first aqueous base coating composition.

The first aqueous base coating composition can be applied by application methods commonly used in the coating material field. Examples of such application methods include multistage application, preferably two-stage application, with use of air-electrostatic spray application, or application combining air electrostatic spray application and a rotary atomization type electrostatic applicator. The thickness of the first aqueous base coating film is preferably in a range of 3 to 40 μm.

Drying or preheating may, as necessary, be carried out after applying the first aqueous base coating composition and before applying the second aqueous base coating composition.

In another embodiment, after the application of the first aqueous base coating composition, the resulting coating film may be heat cured and then followed by the application of the second aqueous base coating composition onto the cured first aqueous base coating film.

Second aqueous base coating composition

As the second aqueous base coating composition, for example, an aqueous base coating composition commonly used for the coating of automobile bodies can be used. Examples of such a second aqueous base coating composition include one comprising a coating film-forming resin, a curing agent, a pigment such as a luster pigment, a coloring pigment, and an extender pigment, and additives with these ingredients being solved or dispersed in an aqueous medium. The second aqueous base coating material is not particularly limited with respect to its form as long as it is aqueous and, for example, it may be in the form of a water-soluble form, a water-dispersion form, an emulsion form, or the like.

The second aqueous base coating material may be applied by the same method as that of the first aqueous base coating material. The thickness of the second aqueous base coating film is preferably in a range of 3 to 20 μm. Drying or preheating may, as necessary, be carried out after applying the second aqueous base coating composition and before applying the clear coating composition.

In another embodiment, after the application of the second aqueous base coating composition, the resulting coating film may be heat cured and then followed by the application of a clear coating composition onto the cured second aqueous base coating film.

Clear coating composition

As the clear coating composition, for example, a composition that is commonly used as a clear coating composition for an automobile body can be used. Examples of such a clear coating composition include a composition comprising a coating film-forming resin and, as necessary, a curing agent and other additives with these ingredients being dispersed or dissolved in a medium. Examples of the coating film-forming resin include an acrylic resin, a polyester resin, an epoxy resin, and a urethane resin. These can be used in combination with a curing agent such as an amino resin and/or an isocyanate resin. From the viewpoints of transparency or acid-resistant etching property, it is preferable to use a combination of an acrylic resin and/or a polyester resin and an amino resin, or an acrylic resin and/or a polyester resin having a carboxylic acid/epoxy curing system.

The application of the clear coating composition can be carried out using an application method known to those skilled in the art according to the mode of application of the clear coating composition. In general, the dry thickness of a clear coating film to be formed by applying the above-described clear coating composition is preferably 10 to 80 μm, and more preferably 20 to 60 μm.

By heat curing an uncured clear coating film resulting from the application of a clear coating composition, a cured clear coating film can be formed. When the clear coating composition has been applied onto an uncured second aqueous base coating film, the uncured coating film is to be heat cured by heating. The heat curing temperature is preferably set to 80 to 180°C, and more preferably 120 to 160°C, from the viewpoint of curability and physical properties of a resulting multilayer coating film. The heat curing time may be set arbitrarily according to the above-mentioned temperature. Examples of the heat curing conditions include conditions where heating is performed at a heat curing temperature of 120°C to 160°C for 10 minutes to 30 minutes.

EXAMPLES

The present invention will be described hereafter in more detail by way of examples, to which the present invention is not intended to be limited. In the examples, "parts" and "%" are on a mass basis unless otherwise indicated.

Production Example 1-1 Production of polyurethane resin dispersion (1)

The active hydrogen component (a), the organic polyisocyanate component (b), and the organic solvent shown in Table 1 below were fed at the masses shown in Table 1 into a simple compression reaction apparatus equipped with a stirrer and a heater, and stirred at 95°C for 15 hours, performing a urethanization reaction. Thus, an acetone solution of a polyurethane resin was produced. While 500.00 parts of the obtained acetone solution of the polyurethane resin was stirred at 30°C, 5.09 parts of triethylamine was added as a neutralizer, and the mixture was homogenized at 60 rpm for 30 minutes, then the temperature was maintained at 30°C, and 651.56 parts of ion-exchanged water (solvent) was gradually added with stirring at 500 rpm. Thereby, the mixture was emulsified. Acetone was distilled off at 65°C over 12 hours under reduced pressure, water was then added, as necessary, to adjust the solid concentration to 35%, and the mixture was filtered through an SUS mesh having a mesh size of 100 μm to afford a polyurethane resin dispersion (1) comprising a polyurethane resin.

Production Examples 1-2 to 1-4 Production of polyurethane resin dispersions (2) to (4)

A polyurethane resin was prepared by the same procedure as in Production Example 1-1 except that the types and/or amounts of the components to be used in the production were changed as shown in the following Table 1. A polyurethane resin dispersion was prepared by dispersing the obtained polyurethane resin in water in the same procedure as in Production Example 1-1.

Production Example 1-5 Production of polyurethane resin dispersion (5)

The active hydrogen component (a) described in Table 1 below was fed at the mass shown in Table 1 into a simple compression reaction apparatus equipped with a stirrer and a heater, and heated and stirred at 120°C for 3 hours under reduced pressure (1.3 kPa). After cooling to 25°C, the organic polyisocyanate component (b) shown in Table 1 was added at the mass shown in Table 1, and the mixture was stirred at 95°C for 15 hours, performing a urethanization reaction. After cooling to 25°C, acetone having the mass shown in Table 1 was added and stirred, yielding an acetone solution of a urethane resin.

Next, an emulsification operation was performed in the same manner as in Production Example 1-1 except that triethylamine was not added and the mass of ion-exchanged water was changed to the mass shown in Table 1.

Thereafter, in the same manner as in Production Example 1-1, operations from the acetone distillation operation

to the filtration operation were performed, affording a polyurethane resin dispersion.

Production Example 1-6 Production of polyurethane resin dispersion (6)

A polyurethane resin was prepared by the same procedure as in Production Example 1-1 except that the types and/or amounts of the components to be used in the production were changed as shown in the following table. A polyurethane resin dispersion was prepared by dispersing the obtained polyurethane resin in water in the same procedure as in Production Example 2-1.

[Table 1]

| | | Polyurethane resin dispersion (A) | | | | | |
|---|---|---|---|---|---|---|---|
| | | (1) | (2) | (3) | (4) | (5) | (6) |
| Active hydrogen component (a) | High-molecular polyol (al-1) | 268.89 | 175.06 | 229.87 | 195.07 | | 181.63 |
| | High-molecular polyol (al-2) | | | | | 310.37 | |
| | High-molecular polyol (al-3) | | | | | 155.18 | |
| | Low-molecular polyol (a2-1) | 9.58 | 33.64 | 21.88 | 15.48 | | 7.54 |
| | Compound having hydrophilic group and active hydrogen (a3) | 6.77 | 6.28 | 6.76 | 10.91 | | 5.95 |
| | Chain extender (isophoronediamine) | | | | | | 24.36 |
| Organic polyisocyanate component (b) | | 68.98 | 113.66 | 95.21 | 83.27 | 34.45 | 83.8 |
| Organic solvent (acetone) | | 145.79 | 171.36 | 146.33 | 195.27 | 214.29 | 184.44 |
| Neutralizer of Compound (a3) | | 5.09 | 4.49 | 4.32 | 6.57 | | 4.47 |
| Ion-exchanged water | | 651.56 | 604.47 | 651.32 | 557.89 | 1050.42 | 557.61 |
| Total | | 1156.66 | 1108.96 | 1155.69 | 1064.46 | 1764.71 | 1049.8 |
| | | | | | | | |
| Physical properties of polyurethane resin | Acid value (mg KOH/g) | 8 | 8 | 8 | 15 | 0 | 8 |
| | Hydroxyl value (mg KOH/g) | 45 | 35 | 37 | 37 | 35 | 38 |
| | Viscosity (Pa·s) | 340 | 112000 | 2500 | 7500 | 100 | ∞ |
| | Amount of insoluble component (%) | 0 | 0 | 0 | 0 | 0 | 4 |
| | Urethane group concentration (mmol/g) | 1.63 | 2.97 | 2.3 | 2.28 | 0.62 | 1.36 |
| | Urea group concentration (mmol/g) | 0.06 | 0.08 | 0.06 | 0.09 | 0 | 1 |
| Solid concentration of dispersion (% by mass) | | 35 | 35 | 35 | 35 | 35 | 35 |

The components shown in the above table are as follows.

High-molecular polyol (a1-1): PTMG1000 [polytetramethylene ether glycol with Mn = 1,000 and Mw/Mn = 1.1, manufactured by Mitsubishi Chemical Corporation]
High-molecular polyol (a1-2): SANNIX PP-2000 [polyoxypropylene glycol with Mn = 2,000, manufactured by Sanyo

Chemical Industries, Ltd.]
High-molecular polyol (al-3): PEG-1000 [polyethylene glycol with Mn = 1,000, manufactured by Sanyo Chemical Industries, Ltd.]
Low-molecular polyol (a2-1): 1,4-butanediol
Compound having a hydrophilic group and active hydrogen (a3): 2,2-dimethylolpropionic acid
Organic polyisocyanate component (b): isophorone diisocyanate
Neutralizer for compound (a3): triethylamine

The physical properties of the polyurethane resin constituting the produced polyurethane resin dispersion (A) were measured by the following procedures.

<Urethane group content and urea group content>

A polyurethane resin dispersion was poured into a polypropylene mold of 10 cm in length, 20 cm in width, and 1 cm in depth, dried at 25°C for 12 hours, and then heated and dried at 105°C for 3 hours in an air-circulation dryer, affording a polyurethane resin for measurement.

The urethane group content and the urea group content of the polyurethane resin were calculated from the N atom content quantified by a nitrogen analyzer [ANTEK 7000 (manufactured by ANTEK)], the ratio of urethane groups to urea groups quantified by 1H-NMR, and the contents of the allophanate groups and the biuret groups described later.

The $^1$H-NMR measurement was performed in accordance with the method described in "Structural Study of Polyurethane Resin by NMR: Journal of the Takeda Research Laboratories 34(2), 224-323 (1975)". Specifically, when an aliphatic isocyanate was used, 1H-NMR analysis was performed to determine a mass ratio of urea groups to urethane groups from the ratio of an integrated value of hydrogen originated from a urea group near the chemical shift of 6 ppm and an integrated value of hydrogen originated from a urethane group near the chemical shift of 7 ppm, and the content of urea groups and the content of urethane groups were calculated from that mass ratio, the aforementioned N atom content, and the contents of the allophanate groups and the biuret groups.

When an aromatic isocyanate was used, the mass ratio of the urea groups to the urethane groups is calculated from the ratio of the integrated amount of hydrogen derived from a urea group near a chemical shift of 8 ppm to the integrated amount of hydrogen derived from a urethane group near a chemical shift of 9 ppm, and then the contents of urethane groups and urea groups are calculated from that mass ratio, the N atom content, and the contents of the allophanate groups and the biuret groups.

<Contents of allophanate groups and biuret groups>

The sum total of the contents of the allophanate groups and the biuret groups of the polyurethane resin was calculated using a gas chromatograph [Shimadzu GC-9A {manufactured by Shimadzu Corporation}]. A 50 g DMF solution containing 0.01% by mass of di-n-butylamine and 0.01% by mass of naphthalene (internal standard) was prepared. The sample was weighed in a test tube with a stopper, 2 g of the DMF solution was added thereto, and the test tube was heated in a thermostatic water bath at 90°C for 2 hours. After cooling to room temperature, 10 μl of acetic anhydride is added and shaken and stirred for 10 minutes. Further, 50 μl of di-n-propylamine was added, and the resulting mixture was shaken for 10 minutes, and then subjected to gas chromatographic measurement. Blank measurement was performed in parallel, the consumption of an amine was determined from the difference from the test value, and the sum total of the contents of the allophanate groups and the biuret groups was measured.

(Gas chromatography conditions)

Instrument: Shimadzu GC-9A
Column: 10% PEG-20M on Chromosorb WAW DMLS 60/80 mesh glass column 3 mmφ × 2 m
Column temperature: 160°C, sample introduction part temperature: 200°C, carrier gas: nitrogen 40 ml/min
Detector: FID, sample injection amount: 2 μl

(Calculation formula of sum total of contents of allophanate groups and biuret groups)

Sum total of contents of allophanate groups and biuret groups = {(B-A)/B} × 0.00155/S

A: (Peak area of di-n-butylacetamide/peak area of naphthalene) of the sample
B: (Peak area of di-n-butylacetamide/peak area of naphthalene) of a blank
S: Amount (g) of the polyurethane resin sampled

<Method for measuring Mw and Mn>

The high-molecular polyol was added in DMF such that a solid content was 0.0125% by mass, stirred and dissolved at normal temperature for 1 hour, and then filtered through a filter having a pore size of 0.3 μm, and the Mw and Mn of the components contained in the resulting filtrate were measured by GPC using DMF as a solvent and polystyrene as a molecular weight standard.

<GPC measurement conditions>

Instrument: "HLC-8220 GPC" [manufactured by Tosoh Corporation]
Column: "Guardcolumn α" + "TSKgel α-M" [both manufactured by Tosoh Corporation]
Sample solution: 0.0125% by mass dimethylformamide solution
Eluent: dimethylformamide
Solution injection amount: 100 μL
Flow rate: 1 ml/min
Measurement temperature: 40°C
Detector: refractive index detector
Reference: standard polystyrene (TSK standard POLYSTYRENE)

[manufactured by Tosoh Corporation]

<Method for measuring mass ratio of insoluble component in polyurethane resin>

A polyurethane resin dispersion (A) was poured into a polypropylene mold of 10 cm in length, 20 cm in width, and 1 cm in depth, dried at 25°C for 12 hours, and then heated and dried at 105°C for 3 hours in an air-circulation dryer, affording a polyurethane resin for measurement. 1 g (this mass is expressed by W) of the resulting polyurethane resin was charged together with a stirrer chip having a length of 3 cm in a pressure-resistant sealed container having an inner diameter of 6 cm and a depth of 12 cm, acetone having a mass 10 times that of the polyurethane resin (10 g) was added, and the mixture was heated at 80°C for 180 minutes, affording a mixed liquid.
The resulting mixed liquid was filtered through an SUS mesh (mesh size: 75 μm) whose mass (W1) had been measured in advance, and then the filtration residue was washed with acetone (the same mass as acetone charged in a pressure-resistant sealed container: 10 g). The filtration residue and the SUS mesh were dried at 105°C for 30 minutes, and then the total mass (W2) was measured. The amount of the insolubles was calculated by the following formula.

$$\text{Mass ratio (\%) of insoluble component} = (W2 - W1)/W \times 100$$

<Method for measuring viscosity of polyurethane resin>

A polyurethane resin dispersion (A) was poured into a polypropylene mold of 10 cm in length, 20 cm in width, and 1 cm in depth, dried at 25°C for 12 hours, and then heated and dried at 105°C for 3 hours in an air-circulation dryer, affording a polyurethane resin for measurement.
The resin viscosity of the resulting polyurethane resin was measured using a rheometer ("MCR -302" manufactured by Anton Paar GmbH).

<Measurement conditions>

Measurement jig: parallel plate "PP-08" (diameter: 8 mm)
distance between plates: 0.5 mm)
Measurement temperature: 25°C

Measurement mode: rotation
Shear rate: 0.1/sec

When it was impossible to conduct viscosity measurement under the conditions shown above using a film formed from the obtained polyurethane resin, the resin viscosity was expressed as "∞".

<Acid value and hydroxyl value of polyurethane resin>

A polyurethane resin dispersion was poured into a polypropylene mold of 10 cm in length, 20 cm in width, and 1 cm in depth, dried at 25°C for 12 hours, and then heated and dried at 105°C for 3 hours in an air-circulation dryer, affording a polyurethane resin for measurement.
The acid value and the hydroxyl value of the polyurethane resin were measured in accordance with JIS K0070 (1992).

Production Example 2 Production of pigment dispersion paste

After preliminarily mixing 4.5 parts of a dispersant Disperbyk 190 (nonionic and anionic dispersant manufactured by BYK-Chemie), 0.5 parts of an antifoaming agent BYK-011 (antifoaming agent manufactured by BYK-Chemie), 22.9 parts of ion-exchanged water, and 72.1 parts of titanium dioxide, a glass bead medium was added in a paint conditioner, and mixed and dispersed at room temperature until the particle size reached 5 μm or less, and thus a pigment dispersion paste was obtained.

Production Example 3 Production of acrylic resin dispersion

Preparation step 1

A reactor equipped with a stirring device, a cooling device, and a heating device was charged with 210 parts by mass of butyl acetate and heated to 120°C. Thereafter, a monomer mixture composed of 73.65 parts by mass of styrene (ST), 178.96 parts by mass of methyl methacrylate (MMA), 75.94 parts by mass of n-butyl acrylate (BA), 64.45 parts by mass of 2-ethylhexyl acrylate, 105.00 parts by mass of hydroxyethyl methacrylate (HEMA), and 2.0 parts by mass of acrylic acid (AA) and a solution prepared by dissolving 70 parts by mass of tert-butyl peroxy-2-ethylhexanate in 45 parts by mass of butyl acetate were dropped from two lines at constant rates over 90 minutes. Thereafter, the mixture was cooled to 60°C, affording a core polymer (core part).

Preparation step 2

Subsequently, 210 parts by mass of butyl acetate was charged into a reactor equipped with a cooling device and a heating device and heated to 120°C. Thereafter, a monomer mixture composed of 835.00 parts by mass of the core polymer obtained in the step (1), 73.65 parts by mass of styrene (ST), 178.96 parts by mass of methyl methacrylate (MMA), 75.94 parts by mass of n-butyl acrylate (BA), 64.45 parts by mass of 2-ethylhexyl acrylate (2-EHA), 105.00 parts by mass of hydroxyethyl methacrylate (HEMA), and 20.0 parts by mass of acrylic acid (AA) and a solution prepared by dissolving 140 parts by mass of tert-butyl peroxy-2-ethylhexanate in 120 parts by mass of butyl acetate were dropped from two lines at constant rates over 90 minutes.

Preparation step 3

The reaction mixture was kept at 120°C for 30 minutes, and a solution prepared by dissolving 3 parts by mass of tert-butyl peroxy-2-ethylhexanate in 80 parts by mass of butyl acetate was dropped from a single line at a constant rate over 30 minutes. After stirring at 120°C for 60 minutes, the mixture was cooled to 70°C to synthesize a core-shell polymer. The resulting core-shell polymer had a resin solid content of 58.5% by mass, and a weight-average molecular weight of 25,000.

Preparation step 4

Subsequently, 170 parts by mass of dipropylene glycol monomethyl ether was added to dilute. Butyl acetate was distilled off from the obtained core-shell polymer under reduced pressure until the solid content reached 85% by mass. To this was added 27.21 parts by mass of dimethylethanolamine (DMEA), and then 1680 parts by mass of water was added to prepare an acrylic resin dispersion. The resin solid content of the resulting acrylic resin dispersion was

36.5% by mass.

Production Example 4 Production of polyester resin dispersion

A reaction vessel for normal polyester-based resin production equipped with a stirrer, a thermometer, a reflux condenser, a nitrogen introduction tube, etc. was charged with 19 parts of isophthalic acid, 36 parts of hexahydrophthalic anhydride, 7 parts of trimethylolpropane, 12 parts of neopentyl glycol, 26 parts of 1,6-hexanediol, and 0.1 parts of dibutyltin oxide as a catalyst, which were then heated from 150°C to 230°C over 3 hours, and held at 230°C for about 5 hours. After cooling to 135°C, 7.7 parts of trimellitic anhydride was added, and the mixture was stirred for 1 hour, affording a polyester resin having a solid acid value of 50 mg KOH/g, a solid hydroxyl value of 45 mg KOH/g, and a number average molecular weight of 2500. After cooling to 90°C, 7.3 parts of dimethylethanolamine and 225 parts of ion-exchanged water were added, affording a polyester resin dispersion having a solid concentration of 30%.

Example 1 Production of aqueous coating composition (1)

After mixing 138.7 parts of the pigment dispersion paste obtained in Production Example 2, 228.6 parts of the polyurethane resin dispersion (1) obtained in Production Example 1-1 (resin solid content: 80 parts), and 28.6 parts (resin solid content: 20 parts) of melamine resin (1) (CYMEL 250, melamine resin manufactured by Allnex, nonvolatile content: 70%) as a curing agent, 1 part of ADEKA NOL UH814 (trade name; urethane-associated viscosity control agent manufactured by ADEKA Corporation) as a viscosity-adjusting agent, and 5 parts of ethylene glycol mono-2-ethylhexyl ether and 5 parts of 2-ethylhexanol as hydrophilic organic solvents were mixed and stirred, and thus aqueous coating composition (1) was obtained.

Examples 2 to 9 and Comparative Examples 1 to 5

Aqueous coating compositions (2) to (14) were prepared in the same manner as in Example 1 except that the polyurethane resin dispersion (A), the melamine resin (B), and the optional acrylic resin dispersion (Production Example 3) and polyester resin dispersion (Production Example 4) were used in the types and amounts shown in the following table.

The following evaluation tests were carried out using the aqueous coating compositions (1) to (14) obtained in the above Examples and Comparative Examples. The results obtained are shown in the following table.

Method for measuring viscosity of coating film

The viscosity of a coating film was measured according to the following procedure.

The aqueous coating compositions prepared in Examples and Comparative Examples were dried with a vacuum desolvation apparatus (ARV-310) manufactured by THINKY CORPORATION until the solid contents reached 60 ± 3% and 80 ± 3%. Subsequently, the viscosity was measured with a viscometer (MCR-301) manufactured by Anton Paar GmbH at a temperature of 25°C and a shear rate of 0.1 $s^{-1}$.

As a parameter indicating the rate of viscosity change, $\eta2/\eta1$ was evaluated where the viscosity at which the solid content in the dry coating film was 60 ± 3% by mass is expressed by $\eta1$ and the viscosity at which the solid content in the dry coating film was 80 ± 3% by mass was expressed by $\eta2$. The evaluation criteria were as follows.

Evaluation criteria of viscosity ($\eta2/\eta1$)

⊙: $1 \leq \eta2/\eta1 \leq 5$ (There is almost no difference in viscosity between a solid content of 60% by mass and a solid content of 80% by mass.)

O: $5 < \eta2/\eta1 \leq 10$ (There is a slight difference in viscosity between a solid content of 60% by mass and a solid content of 80% by mass.)

Δ: $10 < \eta2/\eta1 \leq 15$ (There is a difference in viscosity between a solid content of 60% by mass and a solid content of 80% by mass.)

×: $15 < \eta2/\eta1$ (There is a very large difference in viscosity between a solid content of 60% by mass and a solid content of 80% by mass.)

Evaluation of coating film appearance

Formation of multilayer coating film

POWERNICS150 (trade name, cationic electrodeposition coating material produced by Nippon Paint Automotive Coatings Co., Ltd.) was electrodeposited such that a dry coating film thickness of 20 μm was achieved on a dull steel sheet treated with zinc phosphate, followed by heat-curing at 160°C for 30 minutes and subsequent cooling, and thus a cured electrodeposition coating film was formed.

On the resulting electrodeposition coating film, any one of the aqueous coating compositions (1) to (14) was applied with a rotary atomization type electrostatic applicator such that the dry film thickness was 20 μm thick, and subsequently, AQUAREX AR-2100 NH-700 (trade name, aqueous metallic base coating material manufactured by Nippon Paint Automotive Coatings Co., Ltd.) as a second aqueous base coating composition was applied with a rotary atomization type electrostatic applicator such that the dry film thickness was 10 μm in thickness, followed by preheating at 80°C for 3 minutes.

The aqueous coating composition was applied under two different conditions, namely, through the step of applying it under the wet condition defined by a temperature of 15°C and a humidity of 80% and then applying the second base coating composition under the condition of 25°C and 60%, and through the step of applying the aqueous coating composition under the dry condition defined by a temperature of 30°C and a humidity of 50% and then applying the second base coating composition under the condition of 25°C and 60%. The aqueous coating composition was applied after an interval of 6 minutes from the application of the second base coating composition.

Further, PU EXCEL 0-2100 (trade name, two-component clear coating material manufactured by Nippon Paint Automotive Coatings Co., Ltd.) as a clear coating composition was applied to the coated sheet with a rotary atomization type electrostatic applicator such that the dry film thickness was 35μm thick, followed by heat curing at 140°C for 30 minutes, and thus two types of multilayer coating film specimens differing in the application condition for the aqueous coating composition (1).

The aqueous coating compositions (1) to (14), the second aqueous base coating composition, and the clear coating material were diluted under the following conditions.

- Aqueous coating compositions (1) to (14)

  Diluent solvent: ion-exchanged water
  40 seconds/NO. 4 Ford cup/20°C

- Second aqueous base coating composition

  Diluent solvent: ion-exchanged water
  45 seconds/NO. 4 Ford cup/20°C

- Clear coating composition

  Diluent solvent: mixed solvent of EEP (ethoxyethyl propionate)/S-150 (aromatic hydrocarbon solvent manufactured by Exxon) = 1/1 (mass ratio)
  30 seconds/NO. 4 Ford cup/20°C

Method and criteria for evaluation of coating film appearance

The finished appearance of the resulting multilayer coating films was evaluated by measuring SW (measurement wavelength: 300 to 1,200 μm) using a wave-scan DOI (manufactured by BYK-Gardner). The difference in appearance between the appearance SW (WET) of a coating film applied under wet conditions and the appearance SW (DRY) of a coating film applied under dry conditions was used as an evaluation criterion.

Evaluation criteria for coating film appearance

⊙: SW (DRY) - SW (WET) ≤ 2 (There is almost no difference in appearance between the wet condition and the dry condition.)

O: 2 < SW (DRY) - SW (WET) ≤ 5 (There is a slight difference in appearance between the wet condition and the dry condition, but there is no problem.)

Δ: 5 < SW (DRY) - SW (WET) ≤ 10 (There is a large difference in appearance between the wet condition and the dry condition.)

×: 10 < SW (DRY) - SW (WET) (There is a very large difference in appearance between the wet condition and the dry condition.)

Evaluation of layer miscibility (flip-flop property)

The layer miscibility of the multilayer coating films prepared under the wet condition was evaluated using a flip-flop property. In a multilayer coating film good in layer miscibility, the orientation of the aluminum flakes contained in the second base coating is orderly arranged on the aqueous coating composition applied on a substrate, and the film is strong in flip-flop property. In a multilayer coating film poor in layer miscibility, the orientation of the aluminum flakes contained in the second base coating is randomly arranged on the aqueous coating composition applied on a substrate, and the film lacks flip-flop property.

As to the flip-flop property, L values at 15° (front) and 110° (shade) were measured by using an X-Rite MA68II (manufactured by X-Rite Inc.). The larger the difference is, the better the flip-flop property is.

Evaluation criteria for layer miscibility (flip-flop property)

⊙: 100 ≤ L value (15°) - L value (110°) (The L value difference between the front and the shade is large, and the flip-flop property is strong.)

O: 90 ≤ L value (15°) - L value (110°) < 100 (The L value between the front and the shade is slightly large, and the flip-flop property is slightly strong.)

Δ: 80 ≤ L value (15°) - L value (110°) < 90 (Mix of layers occurred, and the flip-flop property is weak.)

×: L value (15°) - L value (110°) < 80 (Mix of layers occurred violently, and the film lacks flip-flop property.)

[Table 2]

| | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|
| Coating composition No. | (1) | (2) | (3) | (4) | (5) | (6) | (7) | (8) | (9) | (10) | (11) | (12) | (13) | (14) |
| Polyurethane resin dispersion (1) | 80 | | | | 60 | | | | 80 | 80 | | | | |
| Polyurethane resin dispersion (2) | | 80 | | | | 60 | | | | | | | | |
| Polyurethane resin dispersion (3) | | | 80 | | | | 60 | | | | | | | |
| Polyurethane resin dispersion (4) | | | | 80 | | | | 60 | | | | | | |
| Polyurethane resin dispersion (5) | | | | | | | | | | | 80 | | 60 | |
| Polyurethane resin dispersion (6) | | | | | | | | | | | | 80 | | 60 |
| Melamine resin (1) C250 | 20 | 20 | 20 | 20 | 20 | 20 | 20 | 20 | | | 20 | 20 | 20 | 20 |
| Melamine resin (2) C211 | | | | | | | | | 20 | | | | | |

(continued)

| Coating composition No. | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|
| | (1) | (2) | (3) | (4) | (5) | (6) | (7) | (8) | (9) | (10) | (11) | (12) | (13) | (14) |
| Melamine resin (3) C327 | | | | | | | | | | 20 | | | | |
| Acrylic resin dispersion | | | | | 10 | 10 | 10 | 10 | | | | | 10 | 10 |
| Polyester resin dispersion | | | | | 10 | 10 | 10 | 10 | | | | | 10 | 10 |
| $\eta 2/\eta 1$ | ⊙ | ○ | ⊙ | ⊙ | ⊙ | ○ | ⊙ | ⊙ | ⊙ | ⊙ | ⊙ | × | ⊙ | × |
| Phase miscibility (L value 15°) - L value (110°) | ○ | ⊙ | ⊙ | ⊙ | ○ | ⊙ | ⊙ | ⊙ | ○ | × | × | ⊙ | × | ⊙ |
| Coating film appearance (SW(dry) - SW(wet)) | ⊙ | ○ | ⊙ | ⊙ | ⊙ | ○ | ⊙ | ⊙ | ⊙ | ⊙ | ⊙ | × | ⊙ | × |

The components shown in the above table are as follows.

- Melamine resin (2): hydrophobic melamine resin manufactured by Allnex, CYMEL211
- Melamine resin (3): water-soluble melamine resin manufactured by Allnex, CYMEL 327

All of the aqueous coating compositions of the Examples were confirmed to exhibit a small viscosity change caused by change in solid content. Furthermore, all of the aqueous coating compositions of the Examples were reduced in generation of mix of layers between coating film layers, and were confirmed to be good in coating film appearance.
Comparative Example 1 is an example in which a water-soluble melamine resin is contained instead of the hydrophobic melamine resin (B). In this example, generation of mix of layers between coating film layers was observed.
Comparative Examples 2 and 4 are examples in which an aqueous coating composition was prepared using a polyurethane resin dispersion in which the viscosity of a polyurethane resin constituting the polyurethane resin dispersion is lower than the range of the present disclosure. In these examples, generation of mix of layers between coating film layers was observed.
Comparative Examples 3 and 5 are examples in which an aqueous coating composition was prepared using a polyurethane resin dispersion in which the viscosity of a polyurethane resin constituting the polyurethane resin dispersion is higher than the range of the present disclosure. In these examples, there was a large viscosity change caused by change in solid content, and the coating film appearance was confirmed to be poor.

INDUSTRIAL APPLICABILITY

The aqueous coating composition described above has an advantage that it exhibits a small viscosity change and coating can be performed without causing a large change in coating workability even when the amount of the solvent contained in the coating composition is reduced. The aqueous coating composition also has an advantage that deterioration in coating film appearance such as mix of layers can be reduced.

## Claims

1. An aqueous coating composition comprising:

   a polyurethane resin dispersion (A); and
   a melamine resin (B),
   wherein the melamine resin (B) comprises a hydrophobic melamine resin, and
   the polyurethane resin has a viscosity in a range of 101 to 150,000 Pa•s measured at a temperature of 25°C and a shear rate of 0.1 $sec^{-1}$.

2. The aqueous coating composition according to claim 1, wherein the polyurethane resin constituting the polyurethane resin dispersion (A) has a hydroxyl group, and the polyurethane resin has a hydroxyl value in a range of 15 to 100 mg KOH/g.

3. The aqueous coating composition according to claim 1 or 2, wherein the polyurethane resin constituting the polyurethane resin dispersion (A) has an acid group, and the polyurethane resin has an acid value in a range of 5 to 18 mg KOH/g.

4. The aqueous coating composition according to any one of claims 1 to 3, further comprising one or more dispersions selected from the group consisting of an acrylic resin dispersion and a polyester resin dispersion.

5. The aqueous coating composition according to any one of claims 1 to 4, wherein in the polyurethane resin constituting the polyurethane resin dispersion (A), a mass ratio of an insoluble component generated when the polyurethane resin and acetone of 25°C having a mass 10 times a mass of the polyurethane resin are stirred at 80°C for 180 minutes in a sealed state is 5% by mass or less based on the mass of the polyurethane resin.

6. The aqueous coating composition according to any one of claims 1 to 5, wherein the polyurethane resin constituting the polyurethane resin dispersion (A) has a urethane group content of 1.0 to 3.5 mmol/g based on the mass of the polyurethane resin.

7. The aqueous coating composition according to any one of claims 1 to 6, wherein the polyurethane resin constituting

the polyurethane resin dispersion (A) has a urea group content of 0.8 mmol/g or less based on the mass of the polyurethane resin.

8. The aqueous coating composition according to any one of claims 1 to 7, wherein the polyurethane resin constituting the polyurethane resin dispersion (A) is a polyester resin comprising an active hydrogen component and an organic polyisocyanate component as constituent monomers, and the active hydrogen component comprises a polyether polyol having a number average molecular weight of 500 or more.

9. The aqueous coating composition according to claim 8, wherein the organic polyisocyanate component comprises one or more polyisocyanates selected from the group consisting of chain aliphatic polyisocyanates having 4 to 22 carbon atoms and alicyclic polyisocyanates having 8 to 18 carbon atoms.

10. The aqueous coating composition according to any one of claims 1 to 9, wherein as to a viscosity of a dry coating film of the coating composition, a coating film viscosity $\eta 1$ of a dry coating film whose solid content is 60% by mass and a coating film viscosity $\eta 2$ of a dry coating film whose solid content is 80% by mass satisfy a following condition:

$$1 \leq \eta 2/\eta 1 \leq 10$$

where the coating film viscosities $\eta 1$ and $\eta 2$ are viscosities measured at a temperature of 25°C and a shear rate of 0.1 $sec^{-1}$.

11. A method for forming a multilayer coating film, the method comprising:

step (1) of applying a first aqueous base coating composition to a surface of an article to be coated to obtain an uncured first aqueous base coating film;
step (2) of applying a second aqueous base coating composition to the uncured first aqueous base coating film to form an uncured second aqueous base coating film;
step (3) of applying a clear coating composition to the uncured second aqueous base coating film to form an uncured clear coating film; and
step (4) of heating and curing the uncured first aqueous base coating film, the uncured second aqueous base coating film, and the uncured clear coating film obtained in the steps (1) to (3) at one time to form a multilayer coating film,
wherein the first aqueous base coating composition is the aqueous coating composition according to any one of claims 1 to 10.

**INTERNATIONAL SEARCH REPORT**

International application No.
PCT/JP2021/007481

A. CLASSIFICATION OF SUBJECT MATTER
B05D 3/02(2006.01)i; B05D 7/24(2006.01)i; C09D 5/00(2006.01)i; C09D 5/02(2006.01)i; C09D 161/28(2006.01)i; C09D 175/04(2006.01)i; C09D 175/06(2006.01)i; C09D 179/02(2006.01)i
FI: C09D175/04; C09D161/28; C09D179/02; C09D175/06; C09D5/02; C09D5/00 D; B05D3/02 Z; B05D7/24 302T; B05D7/24 302S; B05D7/24 302P; B05D7/24 302V
According to International Patent Classification (IPC) or to both national classification and IPC

B. FIELDS SEARCHED
Minimum documentation searched (classification system followed by classification symbols)
B05D3/02; B05D7/24; C09D5/00; C09D5/02; C09D161/28; C09D175/04; C09D175/06; C09D179/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-290714 A (KANSAI PAINT CO., LTD.) 21 October 2004 (2004-10-21) claims, paragraphs [0002]-[0005], [0020]-[0025], example 1 | 1-11 |
| Y | JP 2011-122038 A (KANSAI PAINT CO., LTD.) 23 June 2011 (2011-06-23) claims, paragraphs [0002]-[0012], [0081], example 10 | 1-11 |
| Y | JP 2006-169395 A (KANSAI PAINT CO., LTD.) 29 June 2006 (2006-06-29) claims, paragraphs [0002]-[0005], [0090]-[0099], example 13 | 1-11 |

☒ Further documents are listed in the continuation of Box C.　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 May 2021 (06.05.2021) | 18 May 2021 (18.05.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/007481

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2018-171593 A (NIPPON PAINT AUTOMOTIVE COATINGS CO., LTD.) 08 November 2018 (2018-11-08) claims, paragraphs [0002]-[0008], [0057]-[0060], examples 1-5 | 1-11 |
| Y | JP 2013-53204 A (KANSAI PAINT CO., LTD.) 21 March 2013 (2013-03-21) paragraphs [0003], [0189] | 1-11 |
| Y | JP 2004-97917 A (KANSAI PAINT CO., LTD.) 02 April 2004 (2004-04-02) paragraphs [0005]-[0006] | 1-11 |
| A | JP 2014-148642 A (NIPPON PAINT CO., LTD.) 21 August 2014 (2014-08-21) | 1-11 |
| A | JP 2013-535311 A (KANSAI PAINT CO., LTD.) 12 September 2013 (2013-09-12) | 1-11 |
| A | JP 2013-710 A (DUPONT SHINTO AUTOMOTIVE SYSTEMS CO., LTD.) 07 January 2013 (2013-01-07) | 1-11 |
| A | JP 2007-56161 A (NIPPON PAINT CO., LTD.) 08 March 2007 (2007-03-08) | 1-11 |
| A | JP 2009-505807 A (KANSAI PAINT CO., LTD.) 12 February 2009 (2009-02-12) | 1-11 |
| A | WO 2020/004386 A1 (NIPPON PAINT AUTOMOTIVE COATINGS CO., LTD.) 02 January 2020 (2020-01-02) | 1-11 |

Form PCT/ISA/210 (continuation of second sheet) (January 2015)

**INTERNATIONAL SEARCH REPORT**
Information on patent family members

International application No.
PCT/JP2021/007481

| Patent Documents referred in the Report | Publication Date | Patent Family | Publication Date |
|---|---|---|---|
| JP 2004-290714 A | 21 Oct. 2004 | US 2003/0175437 A1<br>claims, paragraphs [0002]-[0007], [0022]-[0029], example 1 | |
| JP 2011-122038 A | 23 Jun. 2011 | (Family: none) | |
| JP 2006-169396 A | 29 Jun. 2006 | US 2006/0135678 A1<br>claims, paragraphs [0002]-[0005], [0101]-[0120], example 13<br>CN 1789350 A | |
| JP 2018-171593 A | 08 Nov. 2018 | US 2018/0281019 A1<br>claims, paragraphs [0002]-[0011], [0075]-[0081], examples 1-5<br>CN 108686913 A | |
| JP 2013-53204 A | 21 Mar. 2013 | (Family: none) | |
| JP 2004-97917 A | 02 Apr. 2004 | (Family: none) | |
| JP 2014-148642 A | 21 Aug. 2014 | (Family: none) | |
| JP 2013-535311 A | 12 Sep. 2013 | US 2013/0089731 A1<br>CN 102959019 A | |
| JP 2013-710 A | 07 Jan. 2013 | (Family: none) | |
| JP 2007-56161 A | 08 Mar. 2007 | (Family: none) | |
| JP 2009-505807 A | 12 Feb. 2009 | US 2009/0136729 A1<br>CN 101253002 A | |
| WO 2020/004386 A1 | 02 Jan. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008302274 A
- JP 2006070095 A
- US 5906704 A
- JP 2002012816 A


### Non-patent literature cited in the description


- Structural Study of Polyurethane Resin by NMR. *Journal of the Takeda Research Laboratories,* 1975, vol. 34 (2), 224-323